# EUROPEAN PATENT APPLICATION

(11) **EP 4 459 417 A1**
(43) Date of publication of application: **06.11.2024**
(21) Application number: 22915958.7
(22) Date of filing: 23.12.2022
(51) Int. Cl.: G05G 1/06, E02F 9/16, E02F 9/20

(54) **OPERATION DEVICE AND WORK VEHICLE**

(30) Priority: 28.12.2021 JP 2021214492
(71) Applicant: KUBOTA CORPORATION, Osaka-shi, Osaka 556-8601 (JP)
(72) Inventor: HASHIMOTO Daisuke, Sakai-shi, Osaka 590-0823 (JP); HAYASHI Shohei, Sakai-shi, Osaka 590-0823 (JP)
(74) Representative: Bittner, Thomas L.
(86) International application number: PCT/JP2022/047672
(87) International publication number: WO 2023/127735

(57) **Abstract**

To improve operability of a working vehicle (1) when a front loader (4) is used, in an operation device (18) of the working vehicle (1) with the front loader (4) mounted.

An operation device (18) provided in an operator's seat area (7S) of a working vehicle (1), to operate a front loader (4) attached to a vehicle body (2) of the working vehicle (1) includes a lever shaft (44) extending to the operator's seat area (7S); a grip portion (43) provided at a distal end portion (44A) of the lever shaft (44); and a plurality of operation switches (45) provided at the grip portion (43), to cause the working vehicle (1) to execute various actions. The operation switches (45) include a shuttle changeover switch (45a) to switch between forward travel and backward travel of the working vehicle (1), and a shuttle restraint switch (45e) to restrain the switching with the shuttle changeover switch (45a) and cancel the restraint. (Fig. 1)

## Description

### Technical field

The present invention relates to an operation device mounted on a working vehicle such as a tractor, and a working vehicle including the operation device.

### Background art

Conventionally, an operation device disclosed in PTL 1 is known.

A working vehicle (tractor) disclosed in PTL 1 includes a first operation device (multi-function operation actuator) to increase/decrease the travel speed of the vehicle, and a second operation device (operation actuator for multi-operation) to operate an option function such as a front loader attached to a front portion of a vehicle body. The first operation device and the second operation device are provided at an armrest beside an operator's seat of the working vehicle (tractor). A grip of the first operation device is provided with a shuttle changeover switch (forward/backward travel button) to switch between forward travel and backward travel of the vehicle. The second operation device is a joystick type operation device, and a top portion of a grip (joystick main body) is provided with a push button type operation switch (first fingertip operation actuator). A side portion of the grip is provided with a dial type operation switch (first fingertip operation actuator). Any of these operation switches is an option switch, and for example, capable of being assigned with a function of storing a raising/lowering position of a bucket attached to a front end portion of the front loader.

### Citation list

### Patent literature

PTL 1: Japanese Unexamined Patent Application Publication No. 2016-41565

### Summary of invention

### Technical problem

However, in the above-described conventional operation device, when work is performed using the front loader, it is necessary to operate the switching between forward travel and backward travel of the vehicle and the operation of the front loader by respective different operation devices (the first operation device and the second operation device). Thus, it takes time and effort to change the grip to hold. Also, there is a possibility that the operator fails to grip the grip in an appropriate position and operates a wrong operation switch.

The present invention is made to solve such problems of the related art, and an object of the present invention is to provide an operation device and a working vehicle that can easily and appropriately switch between forward travel and backward travel of the working vehicle even when work is performed using a front loader.

### Solution to problem

The present invention employs the following technical means to attain the above-described object.

An operation device according to one aspect of the present invention is an operation device provided in an operator's seat area of a working vehicle, to operate a front loader attached to a vehicle body of the working vehicle. The operation device includes a lever shaft extending to the operator's seat area; a grip portion provided at a distal end portion of the lever shaft; and a plurality of operation switches provided at the grip portion, to cause the working vehicle to execute various actions. The operation switches include a shuttle changeover switch to switch between forward travel and backward travel of the working vehicle, and a shuttle restraint switch to restrain the switching with the shuttle changeover switch and cancel the restraint.

The shuttle changeover switch may be provided at a position to be operable with a thumb of a hand gripping the grip portion, and the shuttle restraint switch may be provided at a position to be operable with a finger other than the thumb of the hand gripping the grip portion.

The grip portion may be provided with a recess recessed inward from a surface portion, and the shuttle changeover switch may be provided in the recess such that an operation surface portion does not protrude outward of a surface of the grip portion.

The operation switch may include a working tool operation switch capable of being assigned with an operation function of a working tool of the front loader, and the shuttle changeover switch may be disposed adjacent to the working tool operation switch.

The working tool operation switch may be a switch capable of being assigned with an operation function of a working tool that is attached instead of or in addition to a bucket of the front loader.

The grip portion may have a proximal end portion having a substantially vertically long columnar shape and extending upward from the distal end portion of the lever shaft, and a laterally extending portion having a substantially laterally long columnar shape and extending from an upper end of the proximal end portion toward a seat of the operator's seat area; and the shuttle changeover switch and the shuttle restraint switch may be provided at an outer peripheral surface portion of the laterally extending portion.

A distal end surface portion of the laterally extending portion near the seat may be inclined from a front edge that corresponds to a tip of a hand gripping the laterally extending portion toward a rear edge opposite to the front edge so as to face the seat, and at least one of the operation switches other than the shuttle changeover switch and the shuttle restraint switch may be provided at the distal end surface portion.

The laterally extending portion may be inclined upward as extending from an end near a distal end of the lever shaft toward the seat.

A raised portion to allow a thumb of a hand gripping the laterally extending portion to be hooked and held thereon may be provided at a position near a distal end with respect to an intermediate position in an extension direction of the laterally extending portion on the outer peripheral surface portion.

The operation switches may include a speed-change switch to switch a speed stage of the working vehicle, and the speed-change switch may be provided at a distal end surface portion of the laterally extending portion near the seat.

The operation switches may include a loader light switch to switch between turn-on and turn-off of an illumination light provided on the front loader, and the loader light switch may be provided at a distal end surface portion of the laterally extending portion near the seat.

A working vehicle according to one aspect of the present invention includes a vehicle body to be able to travel; a front loader attached to the vehicle body; a first operation device including at least one operation switch to operate the vehicle body; and a second operation device including at least one operation switch to operate the front loader. The at least one operation switch of the first operation device includes a first shuttle changeover switch to switch between forward travel and backward travel of the working vehicle, and a first shuttle restraint switch to restrain the switching with the first shuttle changeover switch and cancel the restraint. The at least one operation switch of the second operation device includes a second shuttle changeover switch to switch between the forward travel and the backward travel of the working vehicle, and a second shuttle restraint switch to restrain the switching with the second shuttle changeover switch and cancel the restraint.

The first operation device and the second operation device may be disposed on one lateral side of a seat provided on the vehicle body and at positions to be operable by an operator seated on the seat with a hand on the one lateral side gripping a grip portion, the first shuttle changeover switch and the second shuttle changeover switch each may be provided at a position to be operable with a thumb of the hand gripping the grip portion, and the first shuttle restraint switch and the second shuttle restraint switch each may be provided at a position to be operable with a finger other than the thumb of the hand gripping the grip portion.

### Advantageous effects of invention

According to the operation device and the working vehicle, the working vehicle can be switched between forward travel and backward travel while the front loader is operated, and thus operability of the working vehicle when the front loader is used is significantly improved.

### Brief description of drawings

- Fig. 1: is a side view of a working vehicle in a state in which a front loader is lowered.
- Fig. 2: is a side view of the working vehicle in a state in which the front loader is raised.
- Fig. 3: is a front perspective view around an upper portion of a cabin.
- Fig. 4: is a top view of an interior of the cabin.
- Fig. 5: is a front perspective view around the front loader
- Fig. 6: is a side perspective view around an intermediate portion of a boom.
- Fig. 7: is a side perspective view around a second illumination light.
- Fig. 8: is a partly exploded perspective view of the second illumination light.
- Fig. 9: is a rear perspective view around a loader operation lever.
- Fig. 10: is a side view around the loader operation lever.
- Fig. 11: is a front view around the loader operation lever.
- Fig. 12(a): is a schematic vertical sectional view around a first operation switch of the loader operation lever. Fig. 12(b) is a schematic vertical sectional view around a second operation switch of the loader operation lever.
- Fig. 13(a): is a schematic vertical sectional view around a third operation switch of the loader operation lever. Fig. 13(b) is a schematic vertical sectional view around a fourth operation switch of the loader operation lever.
- Fig. 14: is a schematic configuration diagram of a controller.

### Description of embodiment

Hereinafter, embodiments of the present invention will be described with reference to the drawings.

### Working Vehicle

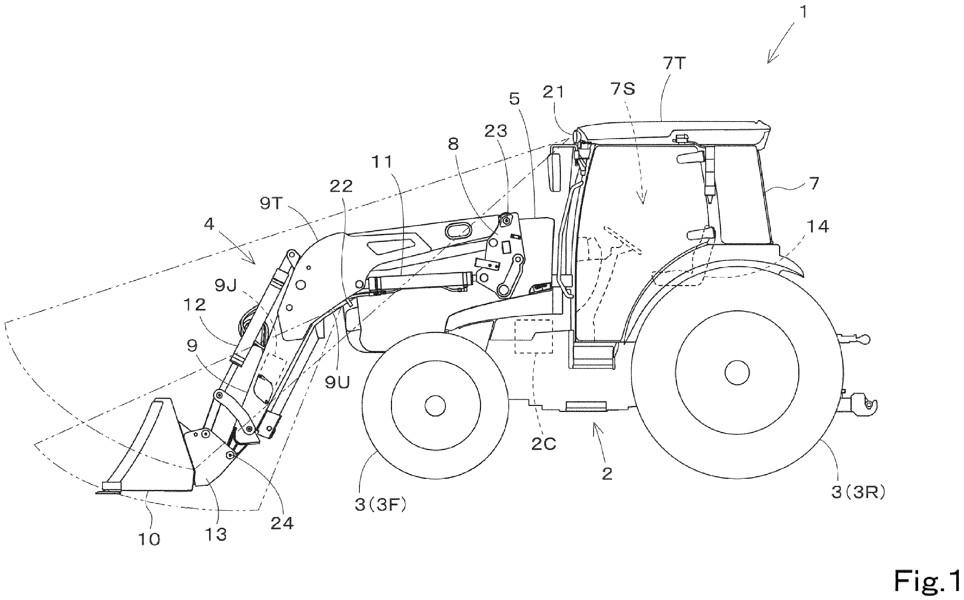

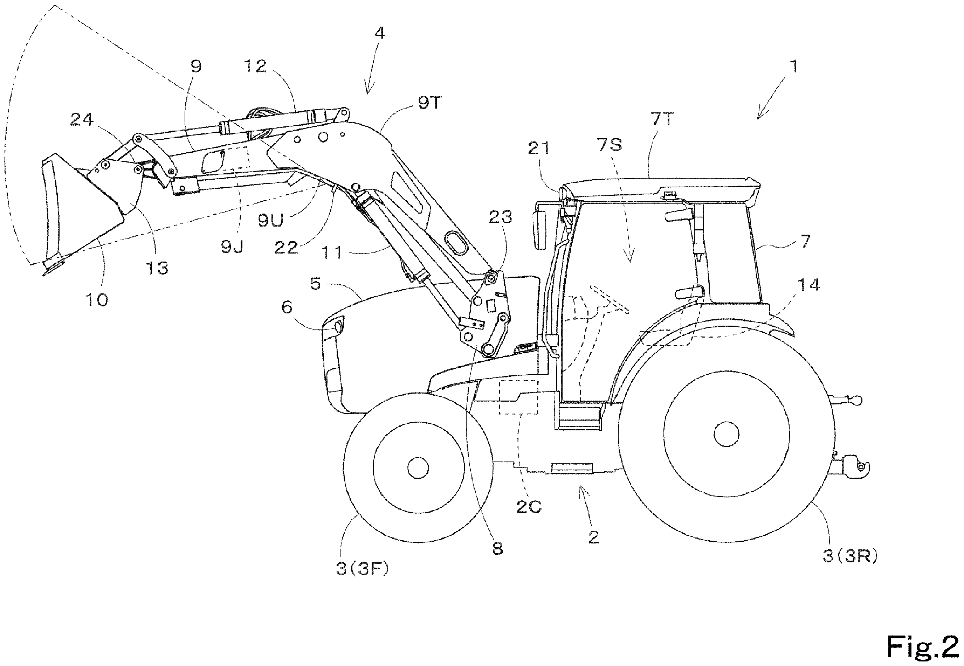

FIGS. 1 and 2 are side views of a working vehicle 1 according to an embodiment of the present invention. The working vehicle 1 of the present embodiment is a tractor. Note that the working vehicle 1 is not limited to the tractor, and may be another type of working vehicle.

Hereinafter, a direction in which the working vehicle 1 travels forward/backward (left-right direction in FIGS. 1 and 2) is described as a front-rear direction, a direction horizontally orthogonal to the direction in which the working vehicle 1 travels forward/backward (near-far direction in FIGS. 1 and 2) is described as a left-right direction, and a direction vertically orthogonal to the direction in which the working vehicle 1 travels forward/backward (up-down direction in FIGS. 1 and 2) is described as an up-down direction. Also, the left-right direction of the working vehicle 1 is described as a width direction of a vehicle body 2, a direction in the width direction of the vehicle body 2 and away from the center in the width direction is described as a laterally outward side of the vehicle body 2, and a direction in the width direction of the vehicle body 2 and toward the center in the width direction is described as a laterally inward side of the vehicle body 2.

The working vehicle 1 includes the vehicle body 2 and a traveling device 3. A front loader 4 is attached to a front portion of the vehicle body 2. The vehicle body 2 is configured to be able to travel. Specifically, a hood 5 is provided on the front portion of the vehicle body 2. An engine and the like are housed inside the hood 5. A clutch housing, a transmission case, a raising/lowering device, and the like are provided in a rear portion of the vehicle body 2. The traveling device 3 includes a front wheel 3F provided at the front portion of the vehicle body 2 and a rear wheel 3R provided at the rear portion of the vehicle body 2. Note that the rear wheel 3R is supported by an output shaft of a rear wheel differential. The rear wheel 3R may be a tire or a crawler.

A headlight 6 is provided on a front portion of the hood 5. A cabin 7 in which an operator rides is provided in an upper portion of the vehicle body 2. That is, the cabin 7 is mounted on the vehicle body 2. Additionally, a controller 2C that controls a traveling system and a working system is mounted on the vehicle body 2. The controller 2C includes an arithmetical unit (CPU or the like), a storage unit (memory), and the like, and executes various types of control on the working vehicle 1 based on a program stored in the storage unit. More specifically, the controller 2C controls the traveling system and the working system of the working vehicle 1 based on operation signals when various operation devices (operation lever, switch, dial, and the like) installed in the cabin 7 are operated, detection signals of sensors provided at various positions of the vehicle body 2, and the like. For example, the controller 2C executes control on the rotation speed of the engine based on a detection signal from an accelerator pedal sensor, control relating to switching of a speed stage of a transmission based on an operation signal from an operation device, control relating to an action of the front loader 4, and the like.

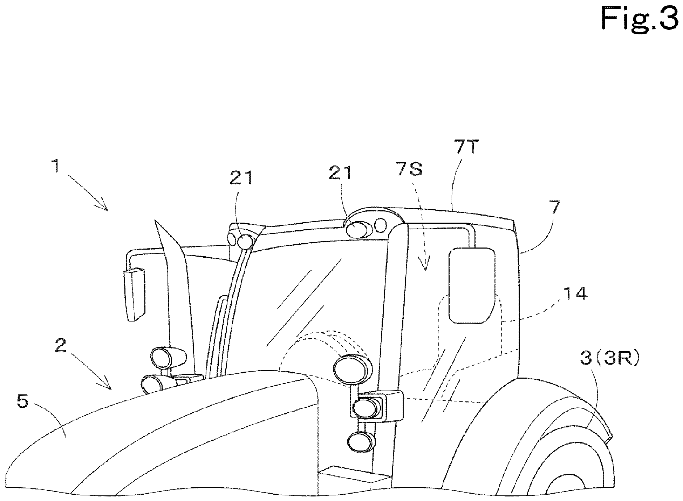

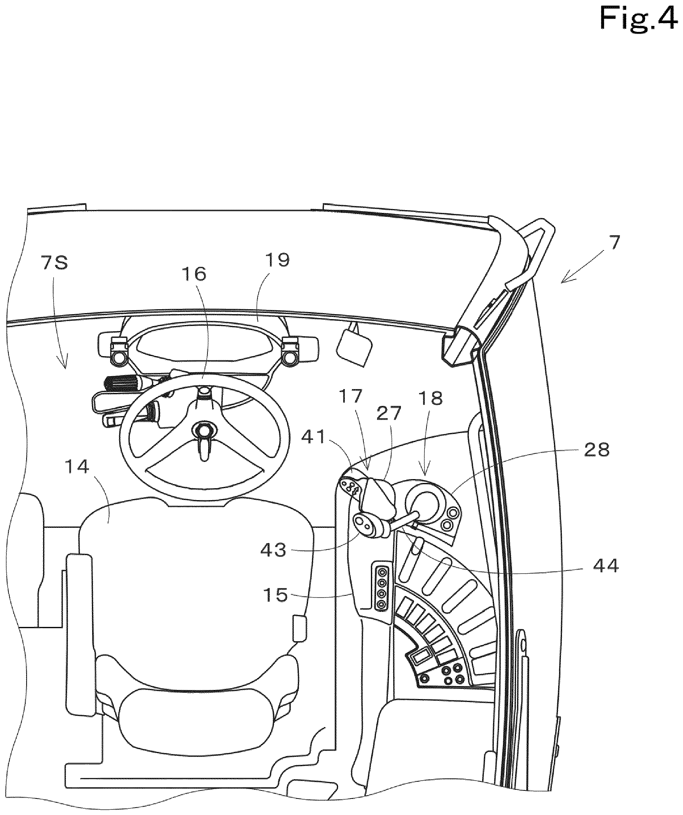

As illustrated in FIGS. 1 to 3, at least one work light 21 is provided on an upper portion of the cabin 7. The work light 21 is an illumination light (first illumination light) that is provided on the vehicle body 2 and illuminates forward of the vehicle body 2. The work light 21 is provided on each of a left front portion and a right front portion of a roof 7T of the cabin 7. Specifically, the work lights 21 are provided at left and right positions of a front portion of the roof 7T that covers a seat 14 from above. When the work lights 21 are turned on, the work lights 21 illuminate a work site in front of the vehicle body 2 from positions higher than the viewpoint of the operator riding in the cabin 7. As illustrated in FIG. 4, the seat 14, an armrest 15, a steering wheel 16, a multi-function operation lever 17, and a loader operation lever 18 are provided in an interior 7S (operator's seat area) of the cabin 7.

The seat 14 is provided at a substantially central portion in the left-right direction in the cabin 7, and the operator is seated on the seat 14 in a posture facing the front. The armrest 15 is provided adjacently on one lateral side of the seat 14. In the case of the present embodiment, the armrest 15 is provided rightward of the seat 14. The armrest 15 extends in the front-rear direction of the seat 14.

### Front Loader

As illustrated in FIGS. 1, 2, and 5, the front loader 4 includes an attachment frame 8, a boom 9, a bucket 10, at least one boom cylinder 11, and at least one bucket cylinder 12. Additionally, the front loader 4 is provided with at least one loader light (second illumination light) 22. In the case of the present embodiment, the loader light 22 is provided on a lower edge portion 9U of the boom 9. However, the loader light 22 may be provided at a position other than the lower edge portion 9U of the boom 9 (for example, a side surface portion of the boom 9). Note that the front loader 4 is not limited to the present embodiment as long as the front loader 4 includes the boom 9 and a working tool (bucket 10). Also, the working tool is not limited to the bucket 10, and may be another type of working tool such as a pallet fork, a sweeper, a mower, or a snow blower.

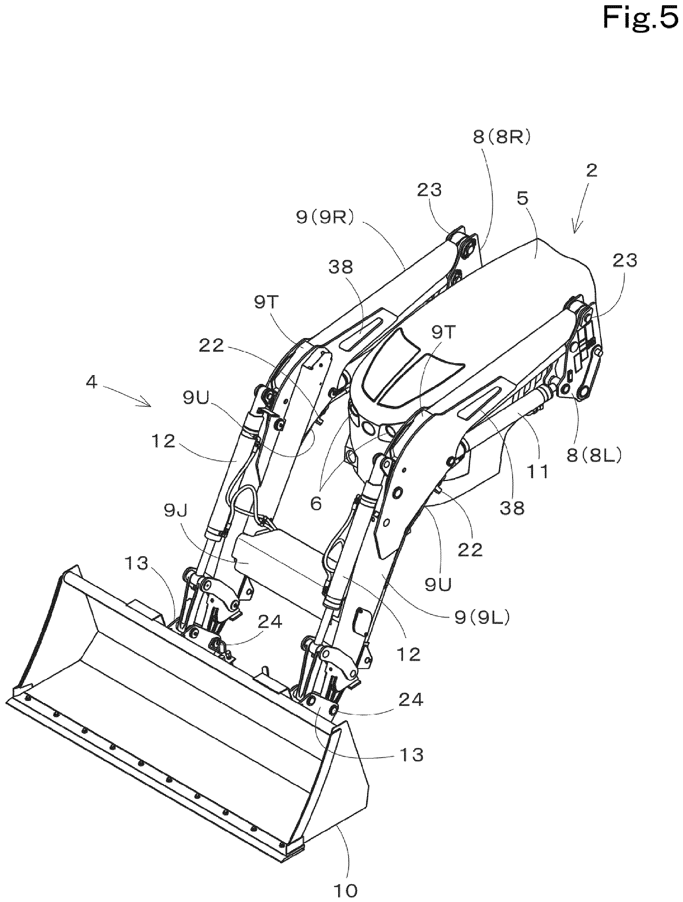

As illustrated in FIG. 5, the attachment frame 8 includes a left frame 8L and a right frame 8R. The left frame 8L and the right frame 8R are detachably attached to a left surface and a right surface of the vehicle body 2, respectively. The front loader 4 is attached to the vehicle body 2 via the attachment frame 8.

The boom 9 is provided at the vehicle body 2 so as to be swingable upward/downward. The boom 9 includes a left boom 9L disposed leftward of the vehicle body 2 and a right boom 9R disposed rightward of the vehicle body 2. In the case of the present embodiment, the left boom 9L and the right boom 9R each are a long, substantially box-shaped tube, and each are formed in a substantially V-like shape in side view in which a substantially central portion in the front-rear direction is bent at an obtuse angle. Note that the left boom 9L and the right boom 9R each are not limited to the substantially box-shaped tube, and may each have another shape. A rear end portion of the left boom 9L is coupled and supported so as to be swingable about a pivot 23 provided at the left frame 8L. A rear end portion of the right boom 9R is coupled and supported so as to be swingable about a pivot 23 provided at the right frame 8R. The left boom 9L and the right boom 9R are coupled to each other by a coupling frame 9J at positions near front ends with respect to the centers in the front-rear direction. Accordingly, the left boom 9L and the right boom 9R swing together with the pivots 23 serving as fulcrums. In the case of the present embodiment, the boom 9 (left boom 9L, right boom 9R) is configured to be swingable upward/downward within a range of approximately 90° from a lower position in which the bucket 10 is disposed forward of and lower than the vehicle body 2 to an upper position in which the bucket 10 is disposed higher than the vehicle body 2.

The bucket (working tool) 10 is attached to a front portion of the boom 9. The bucket 10 is used mainly to shovel earth and sand or the like or push the earth and sand or the like forward in a work site in front of the vehicle body 2, and is coupled and supported by a coupling bracket 13 provided at a rear portion of the bucket 10 so as to be swingable about a pivot 24 provided at a front end portion of the boom 9.

The boom cylinder 11 is provided on a lower surface side of each of the left boom 9L and the right boom 9R, and couples the attachment frame 8 and the boom 9. One end portion of each boom cylinder 11 is pivotally supported by the attachment frame 8 so as to be rotatable. Another end portion of the boom cylinder 11 is pivotally supported by an intermediate portion in the front-rear direction of the boom 9 so as to be rotatable. The boom cylinder 11 is constituted by a hydraulic cylinder. The boom cylinder 11 extends to swing the boom 9 upward about the pivot 23, and contracts to swing the boom 9 downward about the pivot 23. In the case of the present embodiment, a hydraulic hose 25 connected to the boom cylinder 11 is disposed along the lower edge portion (boom lower edge portion) 9U of the boom 9.

The bucket cylinder 12 is provided on an upper surface side of each of the left boom 9L and the right boom 9R, and couples the bucket 10 and the boom 9. One end portion of the bucket cylinder 12 is pivotally supported by the coupling bracket 13 located at the rear portion of the bucket 10 so as to be rotatable. Another end portion of the bucket cylinder 12 is pivotally supported by the intermediate portion in the front-rear direction of the boom 9 so as to be rotatable. The bucket cylinder 12 is constituted by a hydraulic cylinder. The bucket cylinder 12 extends to swing the bucket 10 downward about the pivot 24 (dumping), and contracts to swing the bucket 10 upward about the pivot 24 (shoveling).

### Second Illumination Light

The loader light 22 is an illumination light (second illumination light) provided on the boom 9 and illuminates the periphery of the bucket 10. As illustrated in FIGS. 5 to 7, the loader light 22 is provided on each of the left boom 9L and the right boom 9R. Specifically, the loader light 22 is provided on a lower edge portion (boom lower edge portion 9U) of a substantially central portion in the front-rear direction of each of the left boom 9L and the right boom 9R, and is turned on to illuminate the periphery of the bucket 10 from a position lower than the boom 9.

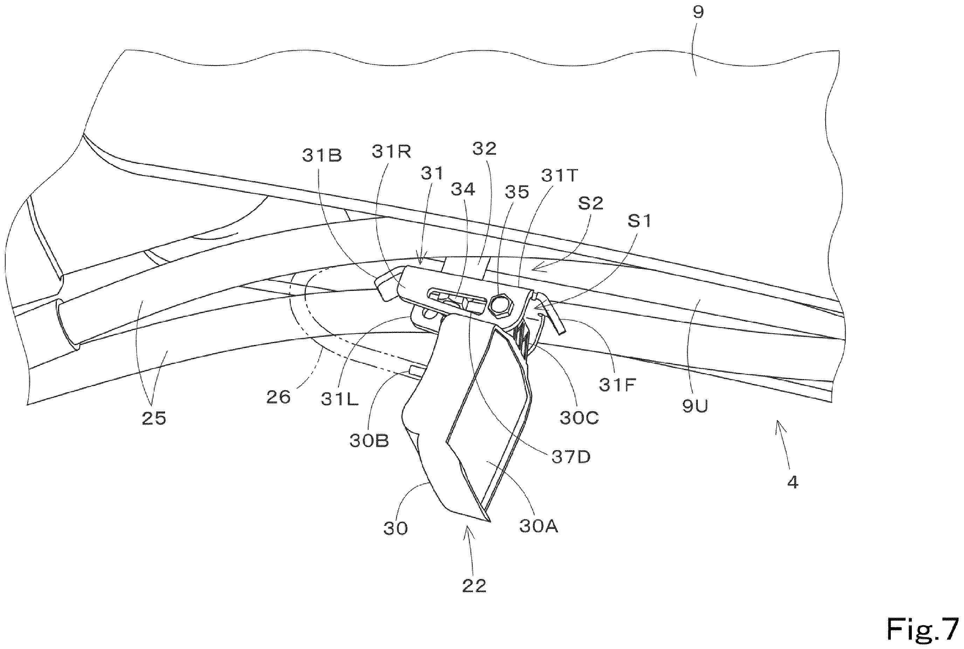

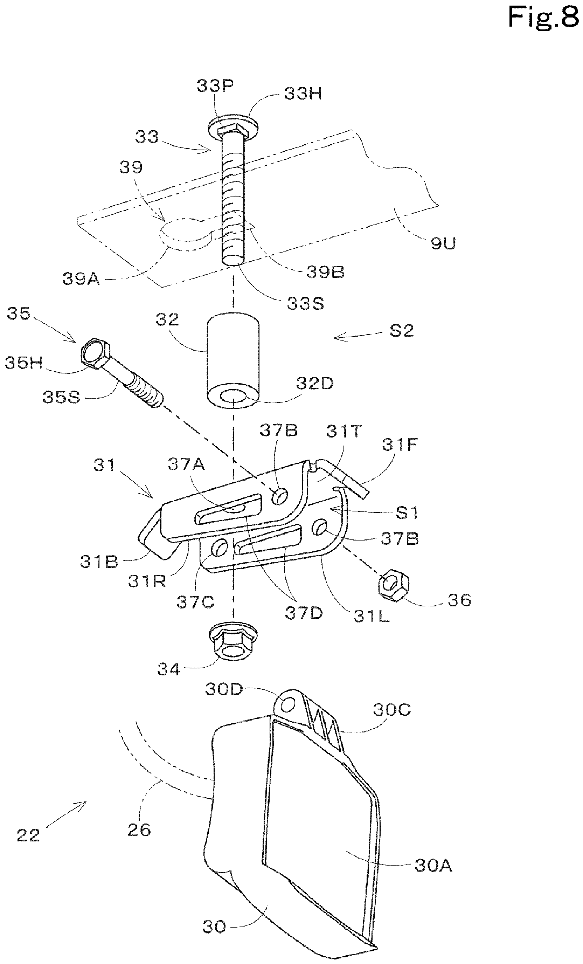

As illustrated in FIGS. 7 and 8, the loader light 22 includes a light main body 30, a light bracket (bracket) 31, a spacer 32, a bracket fixing bolt 33 and a bracket fixing nut 34, and a light fixing bolt 35 and a light fixing nut 36.

The light main body 30 includes a light emitter 30A, a cord connection terminal 30B, and a bracket coupler 30C. A shaft receiving hole 30D is formed through the bracket coupler 30C in the left-right direction. The light main body 30 is formed in a substantially quadrangular shape in front view. The light emitter 30A is provided in a front surface portion of the light main body 30. The cord connection terminal 30B is provided at a rear surface portion of the light main body 30. The bracket coupler 30C is provided at an upper portion of the light main body 30. A power supply cable 26 that supplies electricity to the light main body 30 is connected to the cord connection terminal 30B. In the case of the present embodiment, the power supply cable 26 is arranged along the boom lower edge portion 9U from the cord connection terminal 30B, and is connected to a power supply mounted on the vehicle body 2.

The light bracket 31 is coupled to the boom 9 and supports the loader light 22. The light bracket 31 is provided with flanges 31F and 31B to prevent cables from coming into contact with the loader light 22, at outer edge portions of a facing surface portion facing the boom 9. The flanges 31F and 31B extend outward of the outer edge portions while being inclined in a direction in which a gap S2 (described later) is widened.

Specifically, as illustrated in FIG. 8, the light bracket 31 has an upper plate 31T, a left side plate 31L, a right side plate 31R, a front plate 31F, and a rear plate 31B. The upper plate 31T is formed in a substantially rectangular plate shape that is long in the front-rear direction, and is disposed at a position facing a lower surface of the boom lower edge portion 9U. The left side plate 31L is formed in a substantially trapezoidal plate shape in side view in which a rear edge portion is shorter than a front edge portion, and extends substantially vertically downward from a left side edge portion of the upper plate 31T. The right side plate 31R is formed in a substantially trapezoidal plate shape in side view in which a rear edge portion is shorter than a front edge portion, and extends substantially vertically downward from a right side edge portion of the upper plate 31T. In this way, the left side plate 31L and the right side plate 31R extend substantially in parallel with each other along left and right outer edge portions of the upper plate 31T with a gap S1 having a predetermined width therebetween.

The front plate 31F is formed in a substantially quadrangular plate shape, and extends forward and obliquely downward from a front edge portion (outer edge portion) of the upper plate 31T (the facing surface portion facing the boom 9). The rear plate 31B is formed in a substantially quadrangular plate shape, and extends rearward and obliquely downward from a rear edge portion (outer edge portion) of the upper plate 31T (the facing surface portion facing the boom 9). In this way, the front plate 31F and the rear plate 31B extend from the front and rear outer edge portions of the upper plate 31T obliquely downward in an extension direction of the boom 9 so as to be gradually away from the boom lower edge portion 9U.

A substantially circular shaft insertion hole 37A is provided in the upper plate 31T. The shaft insertion hole 37A is provided at a position located rearward of the center in the front-rear direction of the upper plate 31T. The bracket fixing bolt 33 is inserted into the shaft insertion hole 37A from above the light bracket 31.

Substantially circular shaft insertion holes 37B are provided in the left side plate 31L and the right side plate 31R. The shaft insertion holes 37B are provided at positions located forward of the centers in the front-rear direction of the left side plate 31L and the right side plate 31R so as to face each other. The light fixing bolt 35 is inserted into the shaft insertion holes 37B from a laterally outer side of the light bracket 31.

A substantially circular harness fixing hole 37C is provided in the left side plate 31L. The harness fixing hole 37C is provided at a position located rearward of the center in the front-rear direction of the left side plate 31L. In the case of the present embodiment, a harness (not illustrated) for cable fixing is attached to the harness fixing hole 37C, and the power supply cable 26 is coupled to and held by the light bracket 31 with the harness. Note that the power supply cable 26 may be inserted into the harness fixing hole 37C and held by the light bracket 31.

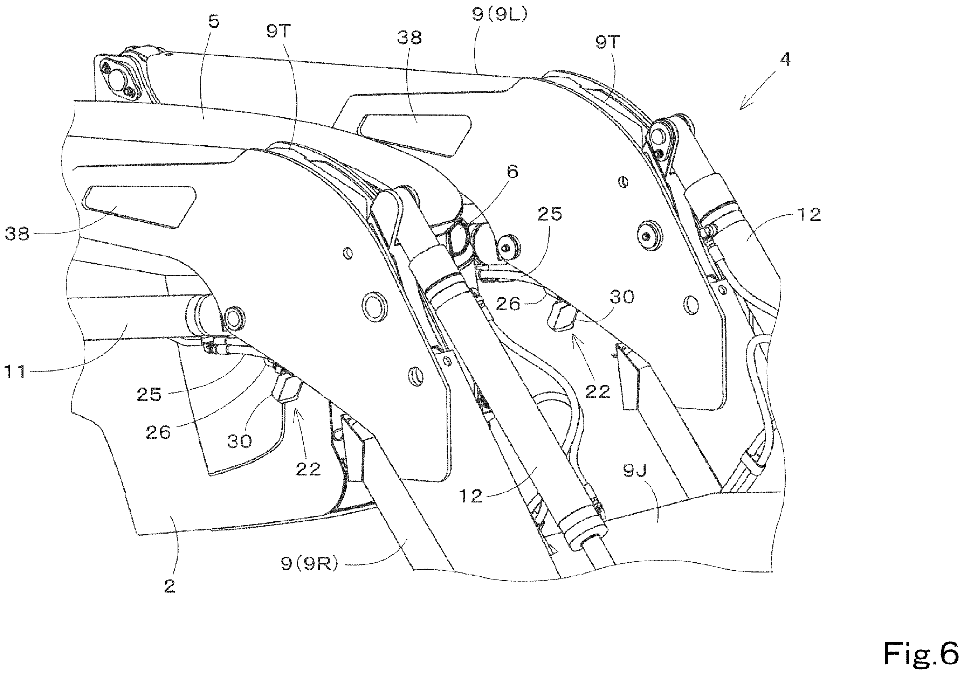

A through hole 37D having a substantially trapezoidal plate shape in side view in which a rear edge portion is shorter than a front edge portion is provided in each of substantially central portions in the front-rear direction of the left side plate 31L and the right side plate 31R. In the case of the present embodiment, a recess 38 having a substantially trapezoidal plate shape in side view in which a rear edge portion is shorter than a front edge portion is provided in each of side surface portions substantially at the centers in the front-rear direction of the left boom 9L and the right boom 9R (see FIG. 6). The recesses 38, the through holes 37D, the left side plate 31L, and the right side plate 31R are formed in substantially similar shapes, thereby attaining uniformity in design in the vicinity of the intermediate portion of the boom 9. Also, when the bracket 31 is to be attached, the bracket 31 is attached while comparing the shapes of the recesses 38 with the shapes of the through holes 37D, or comparing the shapes of the recesses 38 with the shapes of the left side plate 31L and the right side plate 31R, and thus the bracket 31 can be accurately attached without a mistake in the forward/rearward orientation of the bracket 31.

The width dimension (inner dimension) in the left-right direction of the gap S1 between the left and right side plates 31L and 31R is set to be substantially the same as the width dimension in the left-right direction of the bracket coupler 30C of the light main body 30. The bracket coupler 30C is inserted into the gap S1 and is laterally sandwiched by the side plates 31L and 31R.

The spacer 32 is a cylindrical body long in the up-down direction, and is annularly mounted on a bolt shaft 33S of the bracket fixing bolt 33. The spacer 32 is disposed between the boom lower edge portion 9U and the upper plate 31T of the light bracket 31 at a position at which an axis passing through the center of a hollow portion 32D of the spacer 32 is coaxial with the shaft insertion hole 37A of the upper plate 31T.

The bracket fixing bolt 33 has a substantially circular bolt head 33H and the bolt shaft 33S having a diameter smaller than that of the bolt head 33H. An engagement protrusion 33P having a substantially square shape in bottom view is provided on a lower surface portion of the bolt head 33H. The bolt shaft 33S is formed longer in the up-down direction than the spacer 32 annularly mounted on an outer periphery, and protrudes downward of a lower end of the spacer 32. The engagement protrusion 33P is formed to have a width substantially the same as the diameter of the bolt shaft 33S. The bracket fixing bolt 33 is coupled to and held by a bolt attachment hole 39 provided in the boom lower edge portion 9U. Specifically, the bolt attachment hole 39 has a circular hole 39A having a diameter larger than that of the bolt head 33H and a long hole 39B extending forward from a peripheral edge portion of the circular hole 39A. The long hole 39B is formed to have a width substantially the same as the width of the engagement protrusion 33P. When the bracket fixing bolt 33 is to be attached to the bolt attachment hole 39, the bolt head 33H is inserted into the circular hole 39A from below and then slid forward along the long hole 39B. Accordingly, the bolt head 33H is hooked with a side edge portion of the long hole 39B from above, and the engagement protrusion 33P is fitted into the long hole 39B. As a result, the bracket fixing bolt 33 is coupled to and held by the boom lower edge portion 9U in a rotation-prevented state.

The spacer 32 is annularly mounted from below on the bolt shaft 33S of the bracket fixing bolt 33 coupled to the boom lower edge portion 9U as described above. The light bracket 31 is screwed and connected from below to the bolt shaft 33S protruding downward from the hollow portion 32D of the spacer 32. The bracket fixing nut 34 is screwed and connected from below to the bolt shaft 33S protruding downward from the shaft insertion hole 37A of the light bracket 31. Accordingly, as illustrated in FIG. 7, the gap S2 through which the cables arranged along the boom 9 can be inserted is defined between facing surfaces of the boom 9 and the light bracket 31. Specifically, the light bracket 31 is fixed to the boom lower edge portion 9U in a state in which the predetermined gap S2 is present between the facing surfaces of the upper plate 31T and the boom lower edge portion 9U, and the cables such as the hydraulic hose 25 and the power supply cable 26 arranged along the boom lower edge portion 9U extend toward the vehicle body 2 through the gap S2. In this way, the constant gap S2 is formed between the light bracket 31 and the lower edge portion 9U of the boom 9 by the spacer 32, and the hydraulic hose 25 is passed through the gap S2. Thus, it is possible to prevent the hydraulic hose 25 from being pressed between the light bracket 31 and the lower edge portion 9U of the boom 9 and the flow of a hydraulic fluid from being inhibited.

The light fixing bolt 35 has a bolt head 35H and a bolt shaft 35S. The bolt shaft 35S is inserted from the laterally outer side into the shaft insertion holes 37B provided in the side plates 31L and 31R of the light bracket 31. The bracket coupler 30C of the light main body 30 is inserted into the gap S2 between the side plates 31L and 31R from below the light bracket 31 to a position at which the shaft receiving hole 30D is coaxial with the shaft insertion holes 37B of the side plates 31L and 31R. Thus, the bolt shaft 35S is inserted into the shaft receiving hole 30D of the bracket coupler 30C through the shaft insertion holes 37B. The light fixing nut 36 is screwed and connected from a laterally outer side to the bolt shaft 35S protruding laterally outward from one shaft insertion hole 37B. Accordingly, the light main body 30 is supported by the light bracket 31 so as to be swingable forward/rearward about the bolt shaft 35S. Also, when the clamping force of the light fixing nut 36 to the bracket fixing bolt 33 is increased, the bracket coupler 30C is strongly sandwiched in the left-right direction by the left and right side plates 31L and 31R. As a result, the light main body 30 is fixed to the light bracket 31 at a predetermined angle. In this way, by desirably changing the angle of the light main body 30, an illumination direction of the loader light 22 can be adjusted in the front-rear direction of the bucket 10. That is, the loader light 22 is provided so that the illumination direction can be adjusted forward/rearward of the bucket (working tool) 10.

### Operation Device

The steering wheel 16 is a steering device provided in the operator's seat area 7S, to operate the traveling direction of the working vehicle 1. As illustrated in FIG. 4, the steering wheel 16 is connected to and supported by a steering post 19 provided forward of the seat 14 so as to be rotatable, and the steering angle of the front wheel 3F is adjusted by rotating the steering wheel 16 leftward/rightward.

The multi-function operation lever 17 and the loader operation lever 18 are disposed on the one lateral side (right) of the seat 14 provided on the vehicle body 2 of the working vehicle 1, and each are disposed at a position at which the operator seated on the seat 14 can grip and operate a grip 41 or 43 with the hand on the one lateral side (right). Specifically, the multi-function operation lever 17 is connected to a base 27 provided on a front end upper portion of the armrest 15 so as to be swingable forward/rearward. The loader operation lever 18 is connected to a base 28 provided rightward of a front end of the armrest 15 so as to be swingable forward/rearward. Accordingly, the operator can operate the multi-function operation lever 17 and the loader operation lever 18 in a posture in which the right arm is placed on the armrest 15. As a result, the degree of fatigue of the operator during operation is reduced. Note that, in the case of the present embodiment, a work light switch (not illustrated) to manually turn on and turn off the work light 21 is provided at least at any one position or a plurality of positions of the steering post 19, the armrest 15, the multi-function operation lever 17, and the loader operation lever 18.

The multi-function operation lever 17 is an operation device (first operation device) provided in the operator's seat area 7S of the working vehicle 1, to operate the vehicle body 2. The multi-function operation lever 17 includes a grip 41 serving as a grip portion for the operator, a lever shaft (not illustrated) that supports the grip 41, and a plurality of operation switches 42. The lever shaft of the multi-function operation lever 17 extends inside the base 27. The lever shaft of the multi-function operation lever 17 is vertically provided so as to be swingable forward/rearward inside the base 27. The transmission mounted on the vehicle body 2 is configured to switch the speed stage based on an operation signal when the lever shaft is operated to swing forward/rearward.

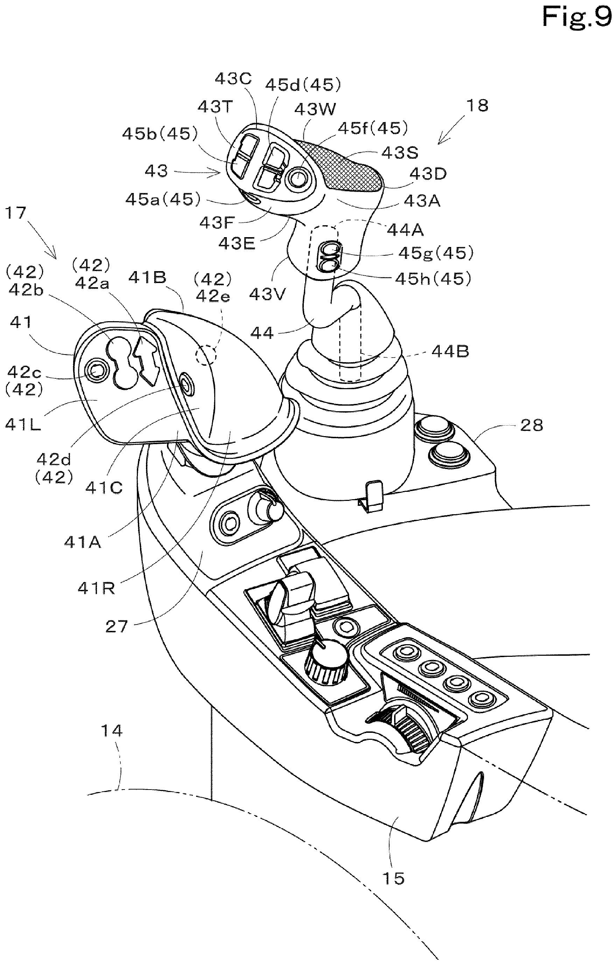

The grip 41 of the multi-function operation lever 17 is provided at an upwardly extending portion of the lever shaft (not illustrated). As illustrated in FIGS. 9 to 11, the grip 41 is formed in an odd block shape having a width dimension in the left-right direction that is larger than a width dimension in the front-rear direction, and is provided at a distal end portion of the lever shaft (not illustrated). A surface portion (grip surface portion) 41A of the grip 41 is inclined downward from a right front portion toward a left rear portion so as to face the operator seated on the seat 14. The grip surface portion 41A is provided with a grip portion 41R and an operation panel portion 41L. The operation panel portion 41L is formed in a substantially flat surface shape, and is provided in a left side portion (near the seat 14) with respect to a substantial center in the left-right direction of the grip surface portion 41A. The grip portion 41R is formed to be raised in a substantially arcuate convex curved surface shape, and is provided in a right portion (opposite to the seat 14) with respect to the substantial center in the left-right direction of the grip surface portion 41A. An edge portion (grip portion front edge portion) 41B extending from a front portion to a right side portion of the grip portion 41R is formed in a substantially arcuate shape in top view. A side surface portion (grip portion side surface portion) 41C of the grip portion 41R near the operation panel portion 41L is formed to stand along a right edge of the operation panel portion 41L. In the case of the present embodiment, a basic gripping manner when the multi-function operation lever 17 is operated is a state in which the grip 41 is gripped laterally obliquely from a right front side such that the palm is placed on the grip portion 41R, the thumb is placed along the grip portion side surface portion 41C, and the four fingers other than the thumb are hooked on the grip portion front edge portion 41B.

The operation switches 42 are provided at the grip 41 and are operation switches to cause the vehicle body 2 to execute various actions. A plurality of operation switches 42 are provided at the operation panel portion 41L of the grip 41. An operation switch 42 is also provided at each of the grip portion side surface portion 41C of the grip 41 and a back surface portion (grip back surface portion) 41D of the grip 41.

The operation switches 42 provided at the operation panel portion 41L include a shuttle changeover switch (first shuttle changeover switch) 42a to manually switch between forward travel and backward travel of the working vehicle 1, a pumper switch 42b to manually raise/lower a working tool attached to the raising/lowering device (not illustrated) in the rear portion of the vehicle body 2, and an automatic speed-change changeover switch 42c to manually switch between an automatic speed-change mode for automatic speed-change and a manual speed-change mode. Note that, in the automatic speed-change mode, an optimum vehicle speed stage is automatically selected by electronic control within a range of vehicle speed stages set in advance by the operator. In the manual speed-change mode, the operator can manually switch the vehicle speed stage.

The operation switch 42 provided at the grip portion side surface portion 41C is a speed-change assist switch 42d to manually switch a speed-change unit of the transmission. In the case of the present embodiment, the transmission includes a main speed-change unit that prevents or reduces impact at the time of switching the speed stage by appropriate control on hydraulic pressure, and a usual synchromesh type sub-speed-change unit. When the multi-function operation lever 17 is swung forward/rearward while the speed-change assist switch 42d is pressed, a speed-change operation accompanied by switching of the sub-speed-change unit can be performed. In contrast, when the multi-function operation lever 17 is swung forward/rearward without the speed-change assist switch 42d being pressed, a speed-change operation of only the main speed-change unit without switching of the sub-speed-change unit can be performed.

The operation switch 42 provided at the grip back surface portion 41D is a shuttle restraint switch (first shuttle restraint switch) 42e to manually restrain the switching with the shuttle changeover switch 42a and cancel the restraint. In the case of the present embodiment, the switching between forward travel and backward travel of the working vehicle 1 is performed when the shuttle changeover switch 42a is pressed while the shuttle restraint switch 42e is pressed. Thus, even though the shuttle changeover switch 42a is pressed without the shuttle restraint switch 42e being pressed, the switching between forward travel and backward travel of the working vehicle 1 is not performed.

The shuttle changeover switch 42a, the pumper switch 42b, the automatic speed-change changeover switch 42c, and the speed-change assist switch 42d are provided at the surface portion (grip surface portion) 41A of the grip 41. The shuttle restraint switch 42e is provided at the back surface portion (grip back surface portion) 41D of the grip 41.

The shuttle changeover switch 42a is a seesaw switch, and is provided at a position located rightward of the center in the left-right direction (near the grip portion 41R) of an upper half surface of the operation panel portion 41L so as to be swingable forward/backward. The pumper switch 42b is a seesaw switch, and is provided at a substantially central portion in the left-right direction of the upper half surface of the operation panel portion 41L so as to be swingable forward/rearward. The automatic speed-change changeover switch 42c is a push switch, and is provided at a position located leftward of the center in the left-right direction (opposite to the grip portion 41R) of the upper half surface of the operation panel portion 41L. The upper half surface of the operation panel portion 41L is located at a position at which the fingertip of the thumb can sufficiently reach when the grip 41 is gripped in the basic gripping manner. That is, the shuttle changeover switch 42a, the pumper switch 42b, and the automatic speed-change changeover switch 42c are provided at positions so as to be operable with the thumb of the hand gripping the grip 41 (grip portion 41R). Thus, any of the shuttle changeover switch 42a, the pumper switch 42b, and the automatic speed-change changeover switch 42c can be operated appropriately with the thumb while the grip 41 is gripped.

The speed-change assist switch 42d is a push switch and is provided at a substantially central portion in the front-rear direction of the grip portion side surface portion 41C. In the case of the present embodiment, the central portion in the front-rear direction of the grip portion side surface portion 41C is a portion that is most likely to be touched by the fingertip of the thumb when the grip 41 is gripped in the basic gripping manner. That is, the speed-change assist switch 42d is provided at a position to be operable with the thumb of the hand gripping the grip 41 (grip portion 41R). Thus, the speed-change assist switch 42d can be operated appropriately with the thumb while the grip 41 is gripped.

The shuttle restraint switch 42e is a push switch and is provided at a position near a front end of the grip portion front edge portion 41B, of the grip back surface portion 41D. That is, the shuttle restraint switch 42e is provided at a position to be operable with the fingertip of a finger (index finger or middle finger) other than the thumb of the hand gripping the grip 41 (grip portion 41R). Thus, the shuttle restraint switch 42e can be operated appropriately with the index finger or the middle finger while the grip 41 is gripped.

The loader operation lever 18 is an operation device (second operation device) provided in the operator's seat area 7S of the working vehicle 1, to operate the front loader 4 attached to the vehicle body 2 of the working vehicle 1. That is, the loader operation lever 18 is a boom operation portion to manually operate the boom 9. The loader operation lever 18 includes a grip 43 serving as a grip portion for the operator, a lever shaft 44 that supports the grip 43, and a plurality of operation switches 45. The lever shaft 44 of the loader operation lever 18 extends to the operator's seat area 7S. The lever shaft 44 is supported inside the base 28 so as to be swingable forward/rearward. In the case of the present embodiment, the lever shaft 44 is a substantially S-shaped tube that extends upward from inside the base 28, extends substantially horizontally toward the seat 14 in the middle, and is formed to further extend upward. An upwardly extending portion (distal end portion) 44A of the lever shaft 44 is inserted into and fixed to the grip 43 of the loader operation lever 18. A downwardly extending portion 44B of the lever shaft 44 is coupled to and supported by a linkage inside the base 28. The boom 9 of the front loader 4 is configured to move upward/downward based on an operation signal when the lever shaft 44 is operated to swing forward/backward.

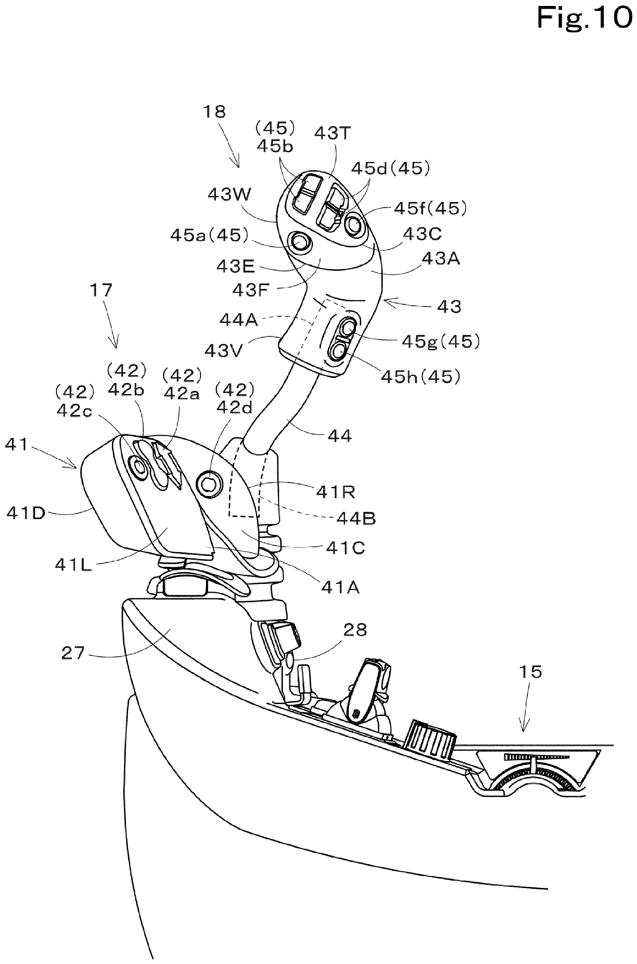

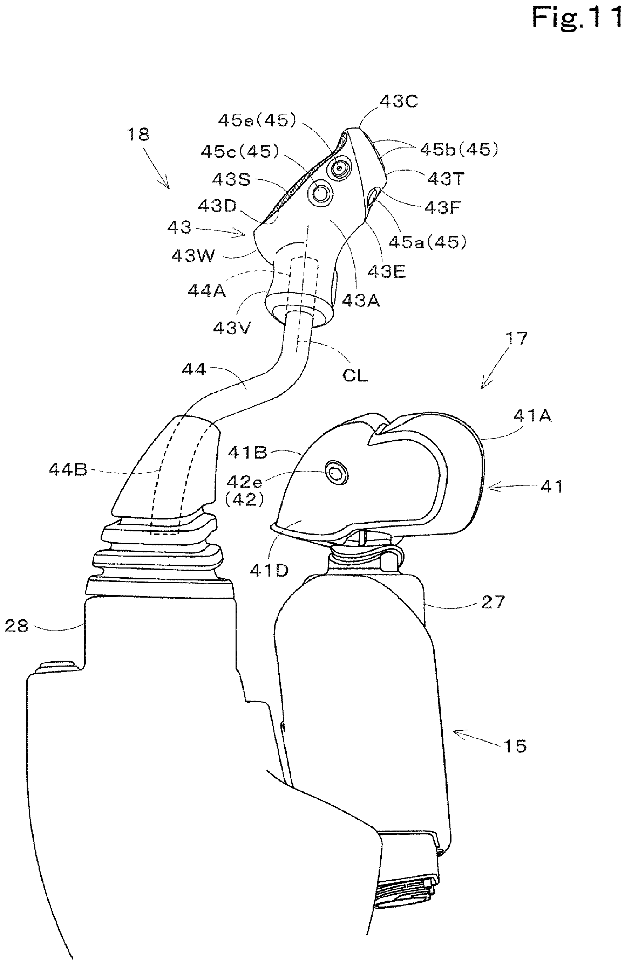

As illustrated in FIGS. 10 and 11, the grip 43 of the loader operation lever 18 is provided at a position higher than the grip 41 of the multi-function operation lever 17. Also, as illustrated in FIG. 4, the grip 43 of the loader operation lever 18 is provided at a position rearward of the grip 41 of the multi-function operation lever 17. That is, the grip 43 of the loader operation lever 18 and the grip 41 of the multi-function operation lever 17 are arranged side by side in the front-rear direction.

The grip 43 of the loader operation lever 18 is provided at the upwardly extending portion 44A of the lever shaft 44. As illustrated in FIGS. 9 to 11, the grip 43 is formed in a substantially inverted L shape extending leftward and upward in the operator's seat area 7S. Specifically, the grip 43 includes a proximal end portion (grip proximal end portion) 43V having a substantially vertically long columnar shape and extending upward from the upwardly extending portion 44A of the lever shaft 44, and a laterally extending portion (grip laterally extending portion) 43W having a substantially laterally long columnar shape and extending from an upper end of the grip proximal end portion 43V toward the seat 14 of the operator's seat area 7S. In the case of the present embodiment, a basic gripping manner when the loader operation lever 18 is operated is a state in which an upper substantially half surface of an outer peripheral surface portion (grip outer peripheral surface) 43A of the grip laterally extending portion 43W is covered with the palm and the grip laterally extending portion 43W is laterally gripped from above with the thumb and the other four fingers being placed along a lower substantially half surface of the grip outer peripheral surface 43A. As illustrated in FIG. 11, the grip laterally extending portion 43W is inclined leftward (toward the seat 14) at a predetermined angle with respect to an axis CL passing through the center of the upwardly extending portion 44A of the lever shaft 44 and at an angle directed upward with respect to a horizontal direction. That is, the grip laterally extending portion 43W of the loader operation lever 18 is inclined upward as extending from a position above the upwardly extending portion (distal end portion) 44A of the lever shaft 44 (the upper end of the grip proximal end portion 43V) toward the seat 14 of the operator's seat area 7S. Accordingly, the operator can grip the grip 43 in a natural posture in which the wrist is twisted laterally and slightly outward (rightward).

As illustrated in FIGS. 9 and 11, in the grip outer peripheral surface 43A, a right end portion of an upper substantially half surface (grip upper surface) 43S is formed in a substantially arcuate concave curved surface shape to be reduced toward the center, and a central portion is formed in a substantially arcuate convex curved surface shape to be expanded radially outward. That is, the grip outer peripheral surface 43A is formed in a streamline shape in which the grip upper surface 43S serving as a palm placing surface is gradually recessed as extending leftward from the right end portion, is turned into a gently raised surface and expands in the central portion, is gradually recessed again as further extending leftward, and reaches a left end portion. Accordingly, when the grip 43 is gripped, a portion in the vicinity of the hypothenar of the hand abuts along a right concave curved surface portion of the grip upper surface 43S and is hooked on the right end portion of the grip upper surface 43S from a left side. Also, a portion in the vicinity of the base portion of the index finger abuts along a left concave curved surface portion of the grip upper surface 43S and is hooked on the left end portion of the grip upper surface 43S from a right side. As a result, the hand is less likely to slip leftward/rightward (in an extension direction of the grip laterally extending portion 43W), and the loader operation lever 18 can be reliably operated. Also, since it is not necessary to strongly grip the grip 43 during operation, fatigue of the hand is reduced.

A non-slip portion 43D is provided on the grip outer peripheral surface 43A. In the case of the present embodiment, the non-slip portion 43D is provided over substantially the entire surface of the upper substantially half surface (grip upper surface) 43S of the grip outer peripheral surface 43A with which the palm comes into contact when the grip 43 is gripped, and is not provided on the lower substantially half surface of the grip outer peripheral surface 43A with which the fingertips come into contact. The non-slip portion 43D is formed of a material having a non-slip function such as rubber, and generates a larger friction force between the grip laterally extending portion 43W and the palm of the hand gripping the grip laterally extending portion 43W than the friction force with the lower substantially half surface of the grip outer peripheral surface 43A without the non-slip portion 43D. Accordingly, the hand gripping the grip 43 is less likely to slip in an extension direction and a circumferential direction thereof, and the loader operation lever 18 can be operated more reliably. Also, when the operation switches 45 provided at the grip 43 are operated, the movement of the finger is not hindered by the non-slip portion 43D.

A plurality of irregularities are formed on a surface of the non-slip portion 43D. In the case of the present embodiment, the irregularities are formed in a form of intersecting grooves extending in a plurality of lines at predetermined intervals obliquely in the circumferential direction. Accordingly, slipping of the hand gripping the grip 43 in the extension direction and the circumferential direction thereof can be further prevented or reduced. The non-slip portion 43D is constituted by attaching or embedding a member formed of the material having the non-slip function to or in the grip outer peripheral surface 43A. Note that the non-slip portion 43D may be formed of the same material as the material of the grip outer peripheral surface 43A or may be formed without the irregularities on the surface as long as the slipping of the hand gripping the grip 43 can be sufficiently prevented or reduced. Also, the non-slip portion 43D does not have to be a body different from the grip outer peripheral surface 43A, and may be integrally formed with the grip outer peripheral surface 43A. Also, the irregularities are not limited to the form of intersecting grooves, and may be any of a form of waves, a form of a plurality of parallel ribs, a group of dimples, a group of small protrusions, a form of irregular undulations, or a combination thereof.

As illustrated in FIGS. 9 to 11, a raised portion 43E is provided on the grip outer peripheral surface 43A. Specifically, the raised portion 43E is provided at a position near a distal end (grip distal end surface) 43T with respect to an intermediate position in the extension direction of the grip laterally extending portion 43W on the outer peripheral surface portion (grip outer peripheral surface) 43A of the grip laterally extending portion 43W. The raised portion 43E allows the thumb of the hand gripping the grip 43 to be hooked and held thereon. The raised portion 43E is formed to have a mountain-shaped vertical section and extends in the circumferential direction along the grip outer peripheral surface 43A. The raised portion 43E is provided adjacently rightward of an outer peripheral edge portion (grip distal end edge portion) 43C of the grip distal end surface 43T. In the case of the present embodiment, the raised portion 43E extends over substantially the entire circumference of the grip outer peripheral surface 43A. Thus, when the grip laterally extending portion 43W is gripped, the thumb or the index finger of the hand is likely to come into contact with the raised portion 43E. Accordingly, the operator can easily recognize the positions of the operation switches 45 provided at the grip outer peripheral surface 43A only with the tactile sense of the thumb or the index finger without visually checking the grip 43. Also, while the grip 43 is gripped, a range from the vicinity of the base (thenar) to the fingertip of the thumb can be hooked on an upper portion of the raised portion 43E. As a result, the fatigue of the hand is further reduced.

A surface (finger placing surface) 43F between the raised portion 43E and the grip distal end edge portion 43C on a left lower portion of the grip outer peripheral surface 43A is formed in a substantially arcuate concave curved surface shape. Thus, the fingertip of the thumb hooked on the raised portion 43E is supported by the finger placing surface 43F. Accordingly, the operator's hand is less likely to be fatigued even though the thumb is hooked on the raised portion 43E for a long time.

A distal end surface portion (grip distal end surface) 43T of the grip laterally extending portion 43W is inclined from a front edge that corresponds to a tip of the hand gripping the grip laterally extending portion 43W toward a rear edge opposite to the front edge. Specifically, the grip distal end surface 43T is inclined from a left front end toward a right rear end so as to face the operator seated on the seat 14. Accordingly, the operator can easily operate the operation switches 45 provided at the grip distal end surface 43T with the fingertip of the thumb.

The operation switches 45 are provided at the grip 43 and are operation switches to cause the working vehicle 1 (the vehicle body 2 and the front loader 4) to execute various actions. A plurality of operation switches 45 are provided at each of the grip distal end surface 43T, the grip outer peripheral surface 43A, and the grip proximal end portion 43V.

The operation switches 45 provided at the grip distal end surface 43T include a third function switch 45b as a working tool operation switch capable of being assigned with an operation function of a working tool (bucket 10 or the like) of the front loader 4, a speed-change switch 45d to manually switch the speed stage of the transmission, and a loader light switch (second illumination switch) 45f to manually turn on and turn off the loader light (second illumination light) 22. The third function switch 45b is a switch capable of being assigned with an operation function of a working tool attached instead of or in addition to the bucket 10 of the front loader 4.

The operation switches 45 provided at the grip outer peripheral surface 43A include a shuttle changeover switch (second shuttle changeover switch) 45a to manually switch between forward travel and backward travel of the working vehicle 1, a fourth function switch 45c as a working tool operation switch capable of being assigned with an operation function of a working tool (bucket 10 or the like) of the front loader 4, and a shuttle restraint switch (second shuttle restraint switch) 45e to manually restrain the switching with the shuttle changeover switch 45a and cancel the restraint. The fourth function switch 45c is a switch capable of being assigned with an operation function of a working tool attached instead of or in addition to the bucket 10 of the front loader 4.

The operation switches 45 provided at the grip proximal end portion 43V include a first option switch 45g and a second option switch 45h capable of being assigned with predetermined functions of the front loader 4.

The third function switch 45b, the speed-change switch 45d, and the loader light switch 45f of the operation switches 45 are provided at the distal end surface portion (grip distal end surface) 43T of the grip 43. Note that the loader light switch 45f may be provided at the grip proximal end portion 43V. Also, the operation function to manually turn on and turn off the loader light (second illumination light) 22 may be assigned to the first option switch 45g or the second option switch 45h, instead of the loader light switch 45f.

The third function switch 45b is a push switch, and is provided in a pair arranged side by side in the up-down direction at positions near the left front end of the grip distal end surface 43T. The speed-change switch 45d is a push switch, and is provided in a pair arranged side by side in the up-down direction at substantially central positions in the left-right direction of the grip distal end surface 43T. The loader light switch 45f is a push switch and is provided at a position near the right rear end of the grip distal end surface 43T.

In the case of the present embodiment, the grip distal end surface 43T is located at a position at which the fingertip of the thumb can sufficiently reach when the grip laterally extending portion 43W is gripped in the basic gripping manner. That is, the third function switch 45b, the speed-change switch 45d, and the loader light switch 45f are provided at positions to be operable with the thumb of the hand gripping the grip laterally extending portion 43W. Thus, any of the third function switch 45b, the speed-change switch 45d, and the loader light switch 45f can be operated appropriately with the thumb while the grip 43 is gripped. Note that the third function switch 45b disposed at the grip distal end surface 43T is a switch that is used more frequently than the other operation switches 45 when work is performed using the front loader 4.

The shuttle changeover switch 45a, the fourth function switch 45c, and the shuttle restraint switch 45e of the operation switches 45 are provided at the outer peripheral surface portion (grip outer peripheral surface) 43A of the grip 43.

The shuttle changeover switch 45a is a push switch and is provided at a position near a left end (distal end) of a lower portion of the grip outer peripheral surface 43A. In the case of the present embodiment, the shuttle changeover switch 45a is provided at the finger placing surface 43F of the grip outer peripheral surface 43A. Also, the shuttle changeover switch 45a is disposed adjacently downward of the third function switch (working tool operation switch) 45b. The fourth function switch 45c and the shuttle restraint switch 45e are both push switches, and are disposed laterally side by side in the left-right direction at positions near a left end (distal end) of a front portion of the grip outer peripheral surface 43A. The shuttle restraint switch 45e is provided leftward (on a distal end side) of the fourth function switch 45c. Note that, in the case of the present embodiment, only the shuttle changeover switch 45a is provided at the finger placing surface 43F, but any of the operation switches 45 described above or an operation switch 45 having another function may be provided as necessary.

In the case of the present embodiment, the left lower portion (finger placing surface 43F) of the grip outer peripheral surface 43A is a portion that is most likely to be touched by the fingertip of the thumb when the grip laterally extending portion 43W is gripped in the basic gripping manner. That is, the shuttle changeover switch 45a is provided at a position to be operable with the thumb of the hand gripping the grip laterally extending portion 43W. Thus, the shuttle changeover switch 45a can be operated quickly and appropriately with the thumb while the grip 43 is gripped. Also, a left front portion of the grip outer peripheral surface 43A (a left front position of a front edge portion of the non-slip portion 43D) is a portion that is most likely to be touched by the fingertip of the index finger or the middle finger when the grip laterally extending portion 43W is gripped in the basic gripping manner. That is, the fourth function switch 45c and the shuttle restraint switch 45e are provided at positions to be operable with the fingertip of a finger (index finger or middle finger) other than the thumb of the hand gripping the grip laterally extending portion 43W. Thus, the fourth function switch 45c and the shuttle restraint switch 45e can be operated quickly and appropriately with the index finger or the middle finger while the grip 43 is gripped. Also, a substantially hemispherical protrusion is formed in a central portion of an operation surface portion 48 of the shuttle restraint switch 45e. Accordingly, the operator can easily recognize the position of the shuttle restraint switch 45e only with the tactile sense of the index finger or the middle finger without visually checking the grip 43. Note that the shuttle changeover switch 45a and the fourth function switch 45c disposed at the grip outer peripheral surface 43A are switches that are used more frequently than the other operation switches 45 when work is performed using the front loader 4.

The first option switch 45g and the second option switch 45h of the operation switches 45 are provided at the grip proximal end portion 43V.

The first option switch 45g and the second option switch 45h are both push switches, and are disposed side by side in the up-down direction at a rear surface of the grip proximal end portion 43V. In the case of the present embodiment, the rear surface of the grip proximal end portion 43V is located at a position at which the fingertip of the thumb can sufficiently reach by the thumb being lowered from a state in which the grip laterally extending portion 43W is gripped in the basic gripping manner. That is, the first option switch 45g and the second option switch 45h are provided at positions to be operable with the thumb of the hand placed on the grip laterally extending portion 43W. Thus, any of the first option switch 45g and the second option switch 45h can be appropriately operated with the thumb while the grip 43 is gripped.

The shuttle changeover switch 45a of the loader operation lever 18 has a function common to the shuttle changeover switch 42a provided at the multi-function operation lever 17, and the shuttle restraint switch 45e of the loader operation lever 18 has a function common to the shuttle restraint switch 42e provided at the multi-function operation lever 17. Thus, the working vehicle 1 can be switched between forward travel and backward travel by the shuttle changeover switch 45a being pressed with the thumb while the shuttle restraint switch 45e is pressed with the index finger in a state in which the loader operation lever 18 is gripped.

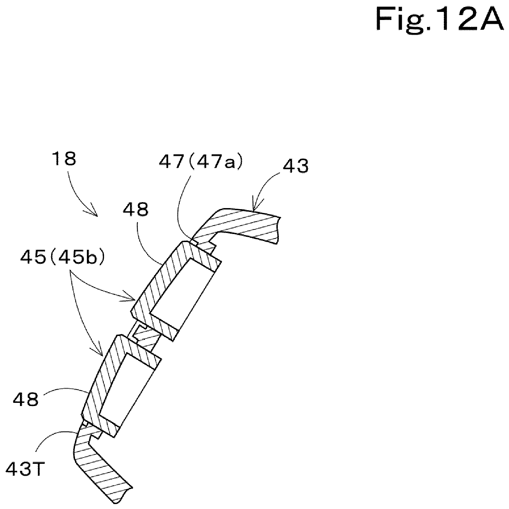

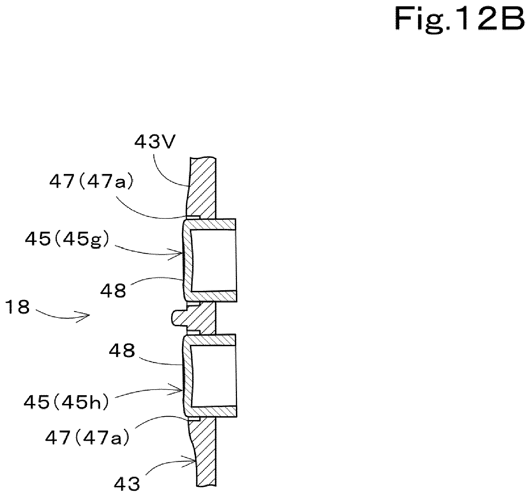

As illustrated in FIGS. 12A to 13B, the grip 43 of the loader operation lever 18 is provided with at least one recess 47 that is recessed inward from a surface portion. Specifically, the recess 47 is provided in an attachment portion of each of the operation switches 45 at the grip distal end surface 43T, the grip outer peripheral surface 43A, and the grip proximal end portion 43V. As illustrated in FIG. 12A and FIG. 12B, a recess 47a provided in each of the attachment portions of the third function switch 45b, the first option switch 45g, and the second option switch 45h of the operation switches 45 is formed to have a substantially E-shaped cross section. The third function switch 45b is provided in the recess 47a in a state in which an operation surface portion 48 protrudes outward of the grip distal end surface 43T. Also, the first option switch 45g and the second option switch 45h are provided in the recesses 47a in a state in which operation surface portions 48 protrude outward of a surface of the grip proximal end portion 43V.

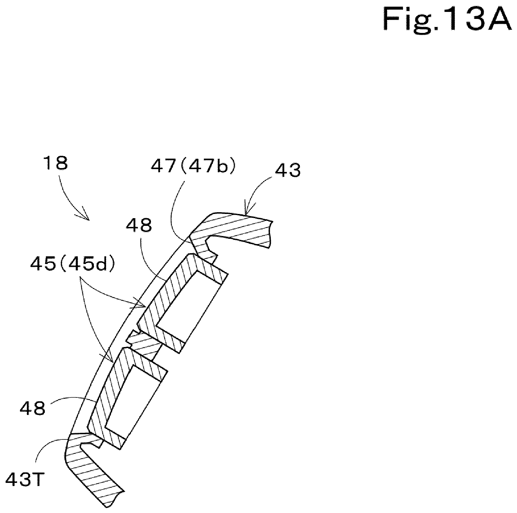

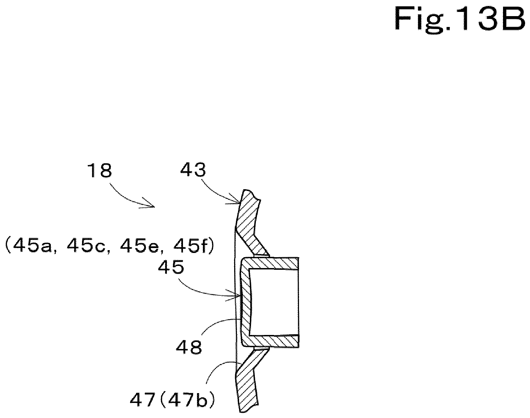

In contrast, as illustrated in FIGS. 13A and 13B, a recess 47b provided in each of attachment portions of the speed-change switch 45d, the shuttle changeover switch 45a, the fourth function switch 45c, the shuttle restraint switch 45e, and the loader light switch 45f of the operation switches 45 is formed in a substantially mortar-like shape. The speed-change switch 45d is provided in the recess 47b such that an operation surface portion 48 does not protrude outward of the grip distal end surface 43T. Also, the shuttle changeover switch 45a, the fourth function switch 45c, the shuttle restraint switch 45e, and the loader light switch 45f are also provided in the recesses 47b likewise such that operation surface portions 48 do not protrude outward of a surface of the grip 43. Thus, when the grip 43 is gripped, the fingers do not inadvertently touch the operation switches 45. Accordingly, an erroneous operation of the vehicle body 2 or the front loader 4 can be prevented. Also, it is possible to prevent the operation switches 45 from impairing operational feeling when the loader operation lever 18 is operated.

### Controller

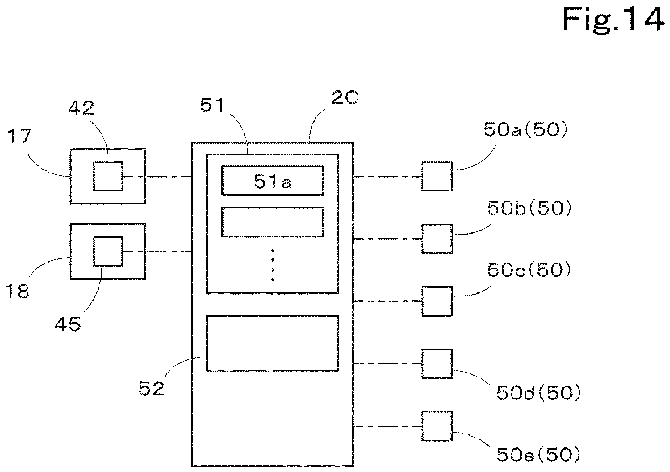

As illustrated in FIG. 14, the controller 2C is connected to a plurality of detectors 50 that are provided at various positions in the working vehicle 1 and detect various states, and switches of the operation devices. The detectors 50 are, for example, an engine rotation speed sensor 50a that detects the rotation speed of the engine, a vehicle speed sensor 50b that detects the traveling speed of the working vehicle 1, an accelerator pedal sensor 50c that detects the operation amount of the accelerator, a steering angle sensor 50d that detects the steering angle of the steering wheel 16, a boom position sensor 50e that detects the extension amount of the boom cylinder 11, and the like. The boom position sensor 50e functions as a boom position detector that detects the position of the boom 9. The switches of the operation devices are, for example, the operation switches 42 of the multi-function operation lever 17, the operation switches 45 of the loader operation lever 18, and the like. However, the above-described detectors 50 and operation switches 42 and 45 are merely examples, and the above-described sensors and switches do not imply any limitation.

Additionally, the controller 2C includes an action control unit 51 that controls actions of the working vehicle 1 and the front loader 4 based on signals from the detectors 50 and the operation switches 42 and 45, and a storage unit 52 that stores various programs and data tables relating to the actions of the working vehicle 1 and the front loader 4. In the case of the present embodiment, the action control unit 51 includes an illumination control unit 51a that controls illumination actions of the work light (first illumination light) 21 and the loader light (second illumination light) 22.

The illumination control unit 51a can execute lighting restriction to automatically turn off or reduce the intensity of the work light (first illumination light) 21 when the loader light (second illumination light) 22 is in a turn-on state. The illumination control unit 51a performs control to turn on and turn off the work light 21 and the loader light 22 based on a signal indicating a turn-on state of the work light 21, a signal indicating the turn-on state of the loader light 22, a position detection signal output from the boom position sensor 50e, an operation signal output in accordance with an operation on the loader light switch 45f, and the like. That is, the illumination control unit 51a controls the turn-on states of the work light 21 and the loader light 22 based on the operation on the loader light switch 45f and the extension amount of the boom cylinder 11 (the height position of the boom 9).

In the present embodiment, the illumination control unit 51a switches between execution and cancellation of the lighting restriction in accordance with position detection information from the boom position sensor (boom position detector) 50e. Specifically, the illumination control unit 51a calculates an actual extension amount of the boom cylinder 11 based on the position detection signal output from the boom position sensor 50e and the data table stored in the storage unit 52, and determines a height position of the boom 9 based on the actual extension amount. Also, the illumination control unit 51a turns on the work light 21 when an on operation on the work light switch (not illustrated) is detected, and turns on the loader light 22 when an on operation on the loader light switch 45f is detected.

Further, the illumination control unit 51a executes the lighting restriction when the boom 9 is raised to a predetermined position or higher. Specifically, when the on operation on the work light switch (not illustrated) is detected or in a case where, after the work light 21 is turned on, the boom 9 is raised to the predetermined position or higher and the actual extension amount is a predetermined threshold or more, the illumination control unit 51a executes lighting restriction to maintain the work light 21 in a turn-off state (to turn off the work light 21 when the work light 21 is turned on).

In contrast, when the boom 9 is lower than the predetermined position, the illumination control unit 51a cancels the lighting restriction. Specifically, in a case where the boom 9 is lower than the predetermined position and the actual extension amount is less than the predetermined threshold, the illumination control unit 51a turns on the work light 21 (maintains the work light 21 in the turn-on state when the work light 21 is turned on). That is, the lighting restriction is cancelled.

The predetermined position can be set to a position at which the height of at least a portion of the boom 9 is the same as the height of the loader light (first illumination light) 21. In the case of the present embodiment, the position of the boom 9 serving as a reference when the switching between the lighting restriction and the restriction cancellation is performed is set at a substantially central upper portion (bent portion upper edge) 9T of the boom 9 in the front-rear direction, and the height position (threshold) at which the switching is performed is set at a position at which the bent portion upper edge 9T is at the same height as the height of the work light 21 (horizontally forward of the work light 21).

Thus, as illustrated in FIG. 2, when the bent portion upper edge 9T of the boom 9 is raised to the height position of the work light 21 or higher, the lighting restriction of the work light 21 is executed, and only the loader light 22 is in the turn-on state. Accordingly, the loader light 22 illuminates forward of the boom 9, that is, the periphery of the bucket 10. In contrast, as illustrated in FIG. 1, when the bent portion upper edge 9T of the boom 9 is lower than the height position of the work light 21, the lighting restriction of the work light 21 is cancelled, and both the work light 21 and the loader light 22 are in the turn-on states. Accordingly, the work site in front of the vehicle body 2 and the periphery of the bucket 10 are illuminated by the work light 21 and the loader light 22.

### Other Embodiments

The above-described embodiment is configured such that the work light 21 is turned off in the case where the boom 9 is raised to the predetermined position or higher when the loader light 22 is in the turn-on state. However, instead of that the work light 21 is completely turned off, the illuminance of the work light 21 may be reduced (the intensity is reduced) to such an extent that visibility in the periphery of the bucket 10 is not impaired with light reflected by the boom 9 or the coupling frame 9J. That is, in the present invention, the illumination control unit 51a can execute lighting restriction to automatically reduce the intensity of the work light 21 when the loader light 22 is in the turn-on state.

Also, the above-described embodiment is configured such that the lighting restriction and the restriction cancellation of the work light 21 are switched depending on whether the bent portion upper edge 9T of the boom 9 is raised to the height of the work light 21 or higher. However, the position of the boom 9 as the reference for the switching is not limited to the bent portion upper edge 9T, and may be set at a front edge portion of the boom 9 or at the attachment position of the loader light 22 on the boom lower edge portion 9U. Also, the height position at which the switching is performed is not limited to the height of the work light 21, and may be set to a position lower than the height of the work light 21 (for example, a height position of an upper surface of the hood 5) or may be set to a position higher than the height of the work light 21 (for example, a highest position in the movable range of the boom 9). Alternatively, a setting operation unit constituted by an operation switch, an operation dial, or the like may be provided at the steering post 19, the armrest 15, the multi-function operation lever 17, the loader operation lever 18, or the like, and the height position (threshold) at which the switching is performed may be manually and desirably set and changed by an operation on the setting operation unit. With such a configuration, the operator can desirably adjust the timing at which the switching between the lighting restriction and the restriction cancellation of the work light 21 is executed in accordance with the illumination direction and arrangement of the work light 21, the shape of the front loader 4, or the like.

Also, the above-described embodiment is configured such that the lighting restriction and the restriction cancellation of the work light 21 are executed in accordance with the height position of the boom 9. However, the illumination control unit 51a may be able to execute lighting restriction of automatically turning off or reducing the intensity of the work light (first illumination light) 21 in response to a turn-on operation of the loader light (second illumination light) 22. Specifically, the illumination control unit 51a may be configured to execute lighting restriction of the work light 21 in response to the on operation on the loader light switch 45f (the turn-on operation of the loader light 22) and cancel the lighting restriction in response to an off operation on the loader light switch 45f (a turn-off operation of the loader light 22).

Also, the above-described embodiment is configured such that, when the boom 9 is lower than the predetermined position, the lighting restriction of the work light 21 is cancelled, and both the work light 21 and the loader light 22 are in the turn-on states. However, when the boom 9 is lower than the predetermined position, the lighting restriction of the work light 21 may be cancelled, and the lighting restriction of the loader light 22 may be executed. Specifically, in the case where the boom 9 is lower than the predetermined position when the loader light 22 is in the turn-on state, the illumination control unit 51a cancels the lighting restriction of the work light 21 (turns on or increases the intensity), and executes the lighting restriction of the loader light 22 (turns off or reduces the intensity). That is, the lighting of the loader light 22 is restricted, and the periphery of the bucket 10 is illuminated by the work light 21. In contrast, when the boom 9 is raised to the predetermined position or higher, the lighting restriction of the work light 21 is executed (the work light 21 is turned off or reduced in intensity), and the lighting restriction of the loader light 22 is cancelled (the loader light 22 is turned on or increased in intensity). That is, the lighting of the work light 21 is restricted, and the periphery of the bucket 10 is illuminated by the loader light 22.

Also, the above-described embodiment is configured such that the actual extension amount of the boom cylinder 11 is calculated based on the position detection signal output from the boom position sensor 50e, and the height position of the boom 9 is linearly determined from the actual extension amount. However, the working vehicle 1 may include a boom position detector that detects the position of the boom 9, and the illumination control unit 51a may be configured to switch between execution and cancellation of the lighting restriction in accordance with position detection information from the boom position detector. Specifically, a rotation angle sensor may be provided at the pivot 23 or the like as the boom position detector that detects the position of the boom 9, an actual angle of the boom 9 may be calculated based on an angle detection signal output from the above-described rotation angle sensor, and the height position of the boom 9 may be linearly determined from the actual angle. Alternatively, a detection sensor such as an infrared detection sensor, a magnet switch, or a seesaw switch may be provided on the vehicle body 2 or the front loader 4 as the boom position detector that detects the position of the boom 9, and the detection sensor may detect the actual position of the boom 9 at a fixed point. Alternatively, an imaging device may be provided in the cabin 7, on the roof 7T, or the like as the boom position detector that detects the position of the boom 9, and the position of the boom 9 may be analyzed and determined based on an image captured by the imaging device.

Also, in the above-described embodiment, the loader light 22 is provided on the lower edge portion 9U of each of the left and right booms 9 (left boom 9L and right boom 9R). However, the loader light 22 may be provided on only one of the left and right booms 9R (left boom 9L or right boom 9R) or may be provided on one or both of left and right side surface portions of the boom 9 instead of the lower edge portion 9U of the boom 9 as long as the loader light 22 can appropriately illuminate the periphery of the bucket 10. Alternatively, the loader light 22 may be provided at an upper portion of the boom 9 (for example, the bent portion upper edge 9T), or may be provided at each of the plurality of aforementioned positions.

Also, the above-described embodiment is configured such that the operator manually switches turn-on and turn-off of the work light 21 using the work light switch (not illustrated). However, the working vehicle 1 may include an illuminance sensor that detects illuminance outside the vehicle body 2, and an automatic operation controller that automatically turns on and turns off the work light 21 based on detection by the illuminance sensor. The automatic operation controller may be configured to automatically turn on the work light 21 when the illuminance outside the vehicle body 2 decreases to a reference value or less and automatically turn off the work light 21 when the illuminance outside the vehicle body 2 exceeds the reference value.

### Effects

In this way, a working vehicle 1 of the above-described embodiment includes a vehicle body 2 to be able to travel; a boom 9 provided on the vehicle body 2 so as to be swingable upward/downward; a bucket (working tool) 10 to be attached to a front portion of the boom 9; at least one work light (first illumination light) 21 provided on the vehicle body 2, to illuminate forward of the vehicle body 2; at least one loader light (second illumination light) 22 provided on the boom 9, to illuminate a periphery of the bucket 10; and an illumination control unit 51a to control illumination actions of the work light 21 and the loader light 22. The illumination control unit 51a is able to execute lighting restriction of automatically turning off or reducing intensity of the work light 21 when the loader light 22 is in a turn-on state.

According to this configuration, when the loader light 22 is used, the work light 21 can be automatically turned off or reduced in intensity. Thus, it is possible to prevent light of the work light 21 from being reflected by the boom 9 or the coupling frame 9J and obstructing the field of view. Accordingly, even when the front loader 4 or the like including the boom 9 is attached to the vehicle body 2 to perform work, a work site in front of the vehicle body 2 and the state in the periphery of the bucket 10 can be appropriately visually recognized.

Additionally, the illumination control unit 51a executes the lighting restriction when the boom 9 is raised to a predetermined position or higher.

According to this configuration, when the boom 9 is raised to the predetermined position or higher in the state in which the loader light 22 is turned on, the work light 21 is automatically turned off or reduced in intensity. Thus, it is possible to prevent the light of the work light 21 from being reflected by the boom 9 or the coupling frame 9J at an appropriate timing. Accordingly, visibility of the work site and the periphery of the bucket 10 when the illumination is used is further improved.

Additionally, the illumination control unit 51a cancels the lighting restriction when the boom 9 is lower than the predetermined position.

According to this configuration, when the boom 9 is lower than the predetermined position in the state in which the loader light 22 is turned on, the lighting restriction of the work light 21 is cancelled. Thus, the loader light 22 and the work light 21 can illuminate forward of the vehicle body 2 (the periphery of the bucket 10). Accordingly, the visibility of the work site and the periphery of the bucket 10 when the illumination is used is further improved.

Additionally, the predetermined position is set to a position at which a height of at least a portion of the boom 9 is the same as a height of the work light 21.

According to this configuration, when at least the portion of the boom 9 is raised to the height of the work light 21 in the state in which the loader light 22 is turned on, the work light 21 is automatically turned off or reduced in intensity. Thus, it is possible to prevent the light of the work light 21 from being reflected by the boom 9 or the coupling frame 9J at an appropriate timing. Accordingly, the visibility of the work site and the periphery of the bucket 10 when the illumination is used is further improved.

Additionally, the working vehicle 1 may include a loader light switch (second illumination switch) 45f to manually turn on and turn off the loader light 22. The illumination control unit 51a may be configured to execute the lighting restriction in response to a turn-on operation on the loader light switch 45f.

According to this configuration, the work light 21 is automatically turned off or reduced in intensity in accordance with the turn-on operation of the loader light 22 with the loader light switch 45f. Thus, it is possible to more reliably prevent the light of the work light 21 from being reflected by the boom 9 or the coupling frame 9J. Accordingly, the state of the work site and the periphery of the bucket 10 when the illumination is used can be appropriately visually recognized.

Additionally, the working vehicle 1 includes a boom position sensor (boom position detector) 50e to detect a position of the boom 9. The illumination control unit 51a switches between execution and cancellation of the lighting restriction in accordance with position detection information from the boom position sensor 50e.

According to this configuration, the switching between the lighting restriction and the restriction cancellation of the work light 21 is performed in accordance with the position detection information on the boom 9. Thus, it is possible to prevent the light of the work light 21 from being reflected by the boom 9 or the coupling frame 9J at an appropriate timing. Accordingly, the visibility of the work site and the periphery of the bucket 10 when the illumination is used is further improved.

Additionally, the working vehicle 1 includes a loader operation lever (second operation device) 18 to manually operate the boom 9. The loader light switch 45f is provided at the loader operation lever 18.

According to this configuration, the loader light 22 can be manually turned on and turned off while the loader operation lever 18 is gripped. Thus, the loader light 22 can be quickly turned on and turned off in accordance with the situation. Accordingly, the state of the work site and the periphery of the bucket 10 when the illumination is used can be further appropriately visually recognized. Also, usability is significantly improved.

Additionally, the loader light 22 is provided on a lower edge portion 9U of the boom 9.

According to this configuration, the work site and the periphery of the bucket 10 can be illuminated from below the boom 9. Thus, the work site and the periphery of the bucket 10 can be more appropriately illuminated compared to a configuration in which the loader light 22 is provided at another position of the boom 9. Accordingly, the visibility of the work site and the periphery of the bucket 10 when the illumination is used is further improved.

Additionally, the loader light 22 is provided so that an illumination direction is adjustable forward/rearward of the bucket 10.

According to this configuration, the operator can desirably adjust the illumination direction of the loader light 22 in accordance with the arrangement of the loader light 22 with respect to the bucket 10, the shape of the front loader 4, or the like. Thus, it is possible to more appropriately visually recognize the state of the work site and the periphery of the bucket 10 when the illumination is used.

Additionally, the working vehicle 1 includes a bracket 31 coupled to the boom 9, to support the loader light 22. A gap S2 to allow cables arranged along the boom 9 to pass therethrough is defined between facing surfaces of the boom 9 and the bracket 31.

According to this configuration, the cables such as the hydraulic hose 25 and the power supply cable 26 can be arranged along the gap S2 defined between the boom 9 and the bracket 31. Thus, it is possible to prevent the cables from rubbing or being caught by the loader light 22 and the attachment direction (illumination direction) of the loader light 22 from being deviated when the boom 9 is actuated. Accordingly, the state of the work site and the periphery of the bucket 10 when the illumination is used can be appropriately visually recognized. Also, it is possible to prevent the cables from being defective due to the rubbing or the catching.

Additionally, the bracket 31 is provided with a front plate 31F and a rear plate 31B (flanges) to prevent the cables from coming into contact with the loader light 22, at a front edge portion and a rear edge portion (outer edge portions) of an upper plate (facing surface portion) 31T facing the boom 9.

According to this configuration, even though the cables arranged along the gap S2 move or bend when the boom 9 is actuated, the cables are prevented from coming into contact with the loader light 22 by the front plate 31F and the rear plate 31B provided at the front and rear outer edge portions of the upper plate 31T of the bracket 31. Thus, the attachment direction of the loader light 22 can be more reliably prevented from being deviated. Accordingly, the state of the work site and the periphery of the bucket 10 when the illumination is used can be further appropriately visually recognized. Also, it is possible to more reliably prevent the cables from being defective due to a contact with the loader light 22. Also, the front plate 31F and the rear plate 31B function as a guide (hose guide) that supports the hydraulic hose 25, which curves in the gap S2, from below.

Additionally, the front plate 31F and the rear plate 31B extend outward of the front edge portion and the rear edge portion (outer edge portions) of the upper plate 31T while being inclined in a direction in which the gap S2 is widened.

According to this configuration, even though the cables arranged along the gap S2 largely move or bend outside the front edge portion and the rear edge portion of the upper plate 31T, the cables are less likely to come into contact with end surfaces in an extension direction of the front plate 31F and the rear plate 31B of the bracket 31. Accordingly, it is possible to more reliably prevent the cables from being defective due to a contact with the front plate 31F and the rear plate 31B.

Additionally, the working vehicle 1 includes a cabin 7 mounted on the vehicle body 2. The boom 9 includes a left boom 9L disposed leftward of the vehicle body 2 and a right boom 9R disposed rightward of the vehicle body 2. The work light 21 is provided on each of a left front portion and a right front portion of a roof 7T of the cabin 7. The loader light 22 is provided on each of the left boom 9L and the right boom 9R.

According to this configuration, the work site and the periphery of the bucket 10 can be illuminated from both left and right portions of the roof 7T and both left and right portions of the boom 9. Thus, the work site and the periphery of the bucket 10 can be illuminated more appropriately compared to a configuration in which the work light 21 is provided at a predetermined position on the roof 7T or a configuration in which the loader light 22 is provided at a predetermined position on the boom 9. Accordingly, the visibility of the work site and the periphery of the bucket 10 when the illumination is used is further improved.

Additionally, a loader operation lever (second operation device) 18 according to the present embodiment is an operation device provided in an operator's seat area 7S of a working vehicle 1, to operate a front loader 4 attached to a vehicle body 2 of the working vehicle 1. The loader operation lever 18 includes a lever shaft 44 extending to the operator's seat area 7S; a grip (grip portion) 43 provided at an upwardly extending portion (distal end portion) 44A of the lever shaft 44; and a plurality of operation switches 45 provided at the grip 43, to cause the working vehicle 1 to execute various actions. The operation switches 45 include a shuttle changeover switch 45a to switch between forward travel and backward travel of the working vehicle 1, and a shuttle restraint switch 45e to restrain the switching with the shuttle changeover switch 45a and cancel the restraint.

According to this configuration, even when work is performed using the front loader 4, the shuttle changeover switch 45a and the shuttle restraint switch 45e can be operated while the grip 43 of the loader operation lever 18 is gripped. That is, the switching between the forward travel and the backward travel of the working vehicle 1 can be easily and appropriately performed while the front loader 4 is operated with the loader operation lever 18. Accordingly, operability of the working vehicle 1 when the front loader 4 is used is significantly improved.

Additionally, the shuttle changeover switch 45a is provided at a position to be operable with a thumb of a hand gripping the grip 43, and the shuttle restraint switch 45e is provided at a position to be operable with a finger other than the thumb of the hand gripping the grip 43.

According to this configuration, the working vehicle 1 can be switched between the forward travel and the backward travel with the shuttle changeover switch 45a being pressed with the thumb while the shuttle restraint switch 45e is pressed with the finger (for example, middle finger) other than the thumb. Thus, the operability of the working vehicle 1 when the front loader 4 is used is further improved.

Additionally, the grip 43 of the loader operation lever 18 is provided with a recess 47 recessed inward from a surface portion (grip outer peripheral surface 43A), and the shuttle changeover switch 45a is provided in the recess 47 such that an operation surface portion 48 does not protrude outward of a surface of the grip 43.

According to this configuration, the finger or palm of the hand gripping the grip 43 is less likely to inadvertently come into contact with the shuttle changeover switch 45a. Thus, it is possible to prevent the shuttle changeover switch 45a from being unintentionally pressed and the working vehicle 1 from being switched between the forward travel and the backward travel. Also, it is possible to prevent the shuttle changeover switch 45a from impairing operational feeling when the loader operation lever 18 is operated. Accordingly, the operability of the working vehicle 1 when the front loader 4 is used is further improved.

Additionally, the operation switch 45 includes a third function switch (working tool operation switch) 45b capable of being assigned with an operation function of a bucket (working tool) 10 of the front loader 4, and the shuttle changeover switch 45a is disposed adjacent to the third function switch 45b.

According to this configuration, the shuttle changeover switch 45a and the third function switch 45b are disposed adjacent to each other. Thus, the switching between the forward travel and the backward travel of the working vehicle 1 can be smoothly performed while the bucket 10 is operated. Thus, the operability of the working vehicle 1 when the front loader 4 is used is further improved. Moreover, since the shuttle changeover switch 45a and the third function switch 45b are switches that are used more frequently than the other operation switches 45, usability is also significantly improved.

Additionally, the third function switch 45b is a switch capable of being assigned with an operation function of a working tool that is attached instead of or in addition to the bucket 10 of the front loader.

According to this configuration, when an operation function of another working tool is assigned to the third function switch 45b, various types of front loaders 4 can be operated with the loader operation lever 18. Thus, versatility is improved.

Additionally, the grip 43 has a grip proximal end portion (proximal end portion) 43V having a substantially vertically long columnar shape and extending upward from the upwardly extending portion (distal end portion) 44A of the lever shaft 44, and a grip laterally extending portion (laterally extending portion) 43W having a substantially laterally long columnar shape and extending from an upper end of the grip proximal end portion 43V toward a seat 14 of the operator's seat area 7S; and the shuttle changeover switch 45a and the shuttle restraint switch 45e are provided at a grip outer peripheral surface (an outer peripheral surface portion of the grip laterally extending portion 43W) 43A.

According to this configuration, when the grip laterally extending portion 43W is gripped laterally so as to cover the grip outer peripheral surface 43A with the palm, the fingertip of the thumb of the hand is naturally disposed in the vicinity of the shuttle changeover switch 45a provided at the grip distal end surface 43T, and the finger (for example, middle finger) other than the thumb is naturally disposed in the vicinity of the shuttle restraint switch 45e provided at the grip outer peripheral surface 43A. As a result, the switching between the forward travel and the backward travel of the working vehicle 1 can be performed further easily. Accordingly, the operability of the working vehicle 1 when the front loader 4 is used is further improved.

Additionally, a grip distal end surface (a distal end surface portion of the grip laterally extending portion 43W near the seat 14) 43T is inclined downward from a front edge that corresponds to a tip of a hand gripping the grip laterally extending portion 43W toward a rear edge opposite to the front edge so as to face the seat 14, and at least one of the operation switches 45 other than the shuttle changeover switch 45a and the shuttle restraint switch 45e is provided at the grip distal end surface 43T.

According to this configuration, when the grip laterally extending portion 43W is gripped laterally so as to cover the grip outer peripheral surface 43A with the palm, the operation switches 45 provided at the grip distal end surface 43T can be operated more naturally and easily with the fingertip of the thumb of the hand. Also, the operator can easily visually recognize the operation switches 45 provided at the grip distal end surface 43T. Accordingly, the operability of the working vehicle 1 when the front loader 4 is used is further improved.

Additionally, the grip laterally extending portion 43W is inclined upward as extending from an end near the upwardly extending portion (distal end portion) 44A of the lever shaft 44 toward the seat 14.

According to this configuration, when the grip laterally extending portion 43W is gripped laterally so as to cover the grip outer peripheral surface 43A with the palm, the grip 43 can be gripped in a natural posture in which the wrist is twisted laterally and slightly outward (oppositely to the seat 14). Thus, fatigue at the time of operating the loader operation lever 18 is reduced. Accordingly, the operability of the working vehicle 1 when the front loader 4 is used is further improved.

Additionally, a raised portion 43E to allow a thumb of a hand gripping the grip laterally extending portion 43W to be hooked and held thereon is provided at a position near a grip distal end surface (distal end) 43T with respect to an intermediate position in an extension direction of the grip laterally extending portion 43W on the grip outer peripheral surface (outer peripheral surface portion) 43A.

According to this configuration, when the grip laterally extending portion 43W is gripped laterally so as to cover the grip outer peripheral surface 43A with the palm, the thumb of the hand can be hooked and held on the raised portion 43E. Thus, fatigue at the time of operating the loader operation lever 18 is further reduced. Accordingly, the operability of the working vehicle 1 when the front loader 4 is used is further improved.

Additionally, the operation switches 45 include a speed-change switch 45d to switch a speed stage of the working vehicle 1, and the speed-change switch 45d is provided at a grip distal end surface (a distal end surface portion of the grip laterally extending portion 43W near the seat 14) 43T.

According to this configuration, the speed-change switch 45d can be operated while the grip 43 of the loader operation lever 18 is gripped. That is, the speed stage of the working vehicle 1 can be switched while the front loader 4 is operated with the loader operation lever 18. Accordingly, the operability of the working vehicle 1 when the front loader 4 is used is further improved.

Additionally, the operation switches 45 include a loader light switch 45f to switch between turn-on and turn-off of a loader light (illumination light) 22 provided on the front loader 4, and the loader light switch 45f is provided at a grip distal end surface (a distal end surface portion of the grip laterally extending portion 43W near the seat 14) 43T.

According to this configuration, the loader light switch 45f can be operated while the grip 43 of the loader operation lever 18 is gripped. That is, the switching between the turn-on and the turn-off of the loader light 22 can be performed while the front loader 4 is operated with the loader operation lever 18. Accordingly, the operability of the working vehicle 1 when the front loader 4 is used is further improved.

Additionally, a working vehicle 1 according to the present embodiment includes a vehicle body 2 to be able to travel; a front loader 4 attached to the vehicle body 2; a multi-function operation lever (first operation device) 17 including at least one operation switch 42 to operate the vehicle body 2; and a loader operation lever (second operation device) 18 including at least one operation switch 45 to operate the front loader 4. The at least one operation switch 42 of the multi-function operation lever 17 includes a shuttle changeover switch (first shuttle changeover switch) 42a to switch between forward travel and backward travel of the working vehicle 1, and a shuttle restraint switch (first shuttle restraint switch) 42e to restrain the switching with the shuttle changeover switch 42a and cancel the restraint. The at least one operation switch 45 of the loader operation lever includes a shuttle changeover switch (second shuttle changeover switch) 45a to switch between the forward travel and the backward travel of the working vehicle 1, and a shuttle restraint switch (second shuttle restraint switch) 45e to restrain the switching with the shuttle changeover switch 45a and cancel the restraint.

According to this configuration, the switching between the forward travel and the backward travel of the working vehicle 1 can be operated with the multi-function operation lever 17, and the switching between the forward travel and the backward travel of the working vehicle 1 can be operated with the loader operation lever 18. That is, the switching between the forward travel and the backward travel of the working vehicle 1 can be performed with any of the multi-function operation lever 17 and the loader operation lever 18. Moreover, when the loader operation lever 18 is used, the switching between the forward travel and the backward travel of the working vehicle 1 can be performed while the front loader 4 is operated. Accordingly, the operability of the working vehicle 1 when work is performed using the front loader 4 is significantly improved.

Additionally, in the above-described working vehicle 1, the multi-function operation lever 17 and the loader operation lever 18 are disposed on one lateral side of a seat 14 provided on the vehicle body 2 and at positions to be operable by an operator seated on the seat 14 with a hand on the one lateral side gripping a grip 41 or 43, the shuttle changeover switches (the first shuttle changeover switch and the second shuttle changeover switch) 42a and 45a each are provided at a position to be operable with a thumb of the hand gripping the grip 41 or 43, and the shuttle restraint switches (the first shuttle restraint switch and the second shuttle restraint switch) 42e and 45e each are provided at a position to be operable with a finger other than the thumb of the hand gripping the grip 41 or 43.

According to this configuration, when the multi-function operation lever 17 is used, the shuttle changeover switch 42a is pressed with the thumb of the hand gripping the grip 41 while the shuttle restraint switch 42e is pressed with the finger (for example, index finger) other than the thumb of the hand gripping the grip 41. Hence, the working vehicle 1 can be switched between the forward travel and the backward travel. In contrast, when the loader operation lever 18 is used, the shuttle changeover switch 45a is pressed with the thumb of the hand gripping the grip 43 while the shuttle restraint switch 45e is pressed with the finger (for example, index finger) other than the thumb of the hand gripping the grip 43. Hence, the working vehicle 1 can be switched between the forward travel and the backward travel. That is, in any of cases where the multi-function operation lever 17 is used and where the loader operation lever 18 is used, the working vehicle 1 can be switched between the forward travel and the backward travel with the same finger operation. Accordingly, the operability of the working vehicle 1 when the front loader 4 is used is further improved.

While the present invention has been described above, it should be understood that the embodiments disclosed herein are examples in all points and are not restrictive. The scope of the present invention is defined not by the above description but by the claims, and is intended to include all modifications within the meaning and scope equivalent to the claims.

### Reference signs list

- 1:: working vehicle
- 2:: vehicle body
- 4:: front loader
- 7S:: operator's seat area
- 10:: bucket (working tool)
- 14:: seat
- 17:: multi-function operation lever (first operation device)
- 18:: loader operation lever (operation device, second operation device)
- 22:: loader light (illumination light)
- 41:: grip (grip portion)
- 42:: operation switch
- 42a:: shuttle changeover switch (first shuttle changeover switch)
- 42e:: shuttle restraint switch (first shuttle restraint switch)
- 43:: grip (grip portion)
- 43A:: grip outer peripheral surface (outer peripheral surface portion)
- 43E:: raised portion
- 43T:: grip distal end surface (distal end surface portion)
- 43V:: grip proximal end portion (proximal end portion)
- 43W:: grip laterally extending portion (laterally extending portion)
- 44:: lever shaft
- 44A:: upwardly extending portion (distal end portion)
- 45:: operation switch
- 45a:: shuttle changeover switch (second shuttle changeover switch)
- 45b:: third function switch (working tool operation switch)
- 45c:: fourth function switch (working tool operation switch)
- 45d:: speed-change switch
- 45e:: shuttle restraint switch (second shuttle restraint switch)
- 45f:: loader light switch
- 47:: recess
- 48:: operation surface portion

## Claims

1. An operation device provided in an operator's seat area of a working vehicle, to operate a front loader attached to a vehicle body of the working vehicle, the operation device comprising:
- a lever shaft extending to the operator's seat area;
- a grip portion provided at a distal end portion of the lever shaft; and
- a plurality of operation switches provided at the grip portion, to cause the working vehicle to execute various actions,
wherein
the operation switches include a shuttle changeover switch to switch between forward travel and backward travel of the working vehicle, and a shuttle restraint switch to restrain the switching with the shuttle changeover switch and cancel the restraint.

2. The operation device according to claim 1, wherein
- the shuttle changeover switch is provided at a position to be operable with a thumb of a hand gripping the grip portion, and
- the shuttle restraint switch is provided at a position to be operable with a finger other than the thumb of the hand gripping the grip portion.

3. The operation device according to claim 1 or 2, wherein
- the grip portion is provided with a recess recessed inward from a surface portion, and
- the shuttle changeover switch is provided in the recess such that an operation surface portion does not protrude outward of a surface of the grip portion.

4. The operation device according to any one of claims 1 to 3, wherein
- the operation switch includes a working tool operation switch capable of being assigned with an operation function of a working tool of the front loader, and
- the shuttle changeover switch is disposed adjacent to the working tool operation switch.

5. The operation device according to claim 4, wherein the working tool operation switch is a switch capable of being assigned with an operation function of a working tool that is attached instead of or in addition to a bucket of the front loader.

6. The operation device according to any one of claims 1 to 5, wherein
- the grip portion has a proximal end portion having a substantially vertically long columnar shape and extending upward from the distal end portion of the lever shaft, and a laterally extending portion having a substantially laterally long columnar shape and extending from an upper end of the proximal end portion toward a seat of the operator's seat area, and
- the shuttle changeover switch and the shuttle restraint switch are provided at an outer peripheral surface portion of the laterally extending portion.

7. The operation device according to claim 6, wherein
- a distal end surface portion of the laterally extending portion near the seat is inclined from a front edge that corresponds to a tip of a hand gripping the laterally extending portion toward a rear edge opposite to the front edge so as to face the seat, and
- at least one of the operation switches other than the shuttle changeover switch and the shuttle restraint switch is provided at the distal end surface portion.

8. The operation device according to claim 6 or 7, wherein the laterally extending portion is inclined upward as extending from an end near a distal end of the lever shaft toward the seat.

9. The operation device according to any one of claims 6 to 8, wherein a raised portion to allow a thumb of a hand gripping the laterally extending portion to be hooked and held thereon is provided at a position near a distal end with respect to an intermediate position in an extension direction of the laterally extending portion on the outer peripheral surface portion.

10. The operation device according to any one of claims 6 to 9, wherein
- the operation switches include a speed-change switch to switch a speed stage of the working vehicle, and
- the speed-change switch is provided at a distal end surface portion of the laterally extending portion near the seat.

11. The operation device according to any one of claims 6 to 10, wherein
- the operation switches include a loader light switch to switch between turn-on and turn-off of an illumination light provided on the front loader, and
- the loader light switch is provided at a distal end surface portion of the laterally extending portion near the seat.

12. A working vehicle comprising:
- a vehicle body to be able to travel;
- a front loader attached to the vehicle body;
- a first operation device including at least one operation switch to operate the vehicle body; and
- a second operation device including at least one operation switch to operate the front loader,
wherein
- the at least one operation switch of the first operation device includes a first shuttle changeover switch to switch between forward travel and backward travel of the working vehicle, and a first shuttle restraint switch to restrain the switching with the first shuttle changeover switch and cancel the restraint, and
- the at least one operation switch of the second operation device includes a second shuttle changeover switch to switch between the forward travel and the backward travel of the working vehicle, and a second shuttle restraint switch to restrain the switching with the second shuttle changeover switch and cancel the restraint.

13. The working vehicle according to claim 12, wherein
- the first operation device and the second operation device are disposed on one lateral side of a seat provided on the vehicle body and at positions to be operable by an operator seated on the seat with a hand on the one lateral side gripping a grip portion,
- the first shuttle changeover switch and the second shuttle changeover switch each are provided at a position to be operable with a thumb of the hand gripping the grip portion, and
- the first shuttle restraint switch and the second shuttle restraint switch each are provided at a position to be operable with a finger other than the thumb of the hand gripping the grip portion.
